(19) Europäisches Patentamt
European Patent Office
Office européen des brevets

(11) **EP 4 641 524 A1**

(12) **EUROPEAN PATENT APPLICATION**

(43) Date of publication:
**29.10.2025 Bulletin 2025/44**

(21) Application number: **24207627.1**

(22) Date of filing: **18.10.2024**

(51) International Patent Classification (IPC):
**G06V 20/58** (2022.01)    **G06T 7/73** (2017.01)

(52) Cooperative Patent Classification (CPC):
**G06V 20/586; G06T 7/73**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2024 KR 20240055887**

(71) Applicant: **Samsung Electronics Co., Ltd**
**Suwon-si, Gyeonggi-do 16677 (KR)**

(72) Inventors:
• **CHOI, Ho-Ik**
  **16678 Suwon-si (KR)**
• **PARK, Yonggonjong**
  **16678 Suwon-Si (KR)**
• **LEE, Jaewoo**
  **16678 Suwon-Si (KR)**

(74) Representative: **Arnold & Siedsma**
**Bezuidenhoutseweg 57**
**2594 AC The Hague (NL)**

(54) **METHOD, APPARATUS, AND DEVICE WITH VEHICLE POSITION DETERMINATION**

(57)    A processor-implemented method including selecting a first reference landmark from among a first plurality of candidate landmarks related to a parking area of a vehicle in a first frame image corresponding to a first timepoint, determining positioning information of the vehicle by using geometric relationship information of the selected first reference landmark with respect to the vehicle, selecting a second reference landmark from among a second plurality of candidate landmarks in a second frame image corresponding to a second timepoint, the second timepoint being temporally subsequent to the first timepoint, and updating the positioning information using the geometric relationship information of the selected second reference landmark with respect to the vehicle.

**FIG. 2**

EP 4 641 524 A1

**Description**

FIELD

The following description relates to a method, apparatus, and device with vehicle position determination.

BACKGROUND

Semantic road information may refer to lanes, pedestrian crossing lines, parking lines, signs, or the like, which provide significant information to drivers. In a situation where there are many dynamic objects, the estimation of the position and route of a moving object based on semantic road information may be utilized for stable autonomous driving. In addition, the semantic road information may also be utilized when parking in an underground parking lot where there may be a lot of dynamic objects, such as moving people and vehicles.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

According to an aspect of the present disclosure, a processor-implemented method as defined in any of the appended claims 1-13 is provided.

According to another aspect of the present disclosure, a non-transitory computer-readable storage medium as defined in appended claim 14 is provided.

According to yet another aspect of the present disclosure, an electronic device as defined in appended claim 15 is provided.

Other features and aspects will be apparent from the following detailed description, the appended drawings, and the appended claims.

BRIEF DESCRIPTION OF THE DRAWINGS

FIG. 1 illustrates an example method of determining the positioning information of a vehicle according to one or more embodiments.

FIG. 2 illustrates an example operation of detecting a candidate landmark and determining a score of the candidate landmark according to one or more embodiments.

FIG. 3 illustrates an example of an operation of determining a parking area according to one or more embodiments.

FIG. 4 illustrates an example of an operation of changing a reference landmark across a plurality of timepoints according to one or more embodiments.

FIG. 5 illustrates an example operation of changing a reference landmark across a plurality of timepoints according to one or more embodiments.

FIG. 6 illustrates an example method of determining the positioning information of a vehicle by using sensing data collected through a plurality of sensors according to one or more embodiments.

FIG. 7 illustrates an example operation of determining the first geometric relationship information and second geometric relationship information of vertices of a parking area according to one or more embodiments.

FIG. 8 illustrates an example operation of determining the first geometric relationship information and second geometric relationship information of edges of a parking area according to one or more embodiments.

FIG. 9 illustrates an example operation of determining the first geometric relationship information and second geometric relationship information of an object in or around a parking area according to one or more embodiments.

FIG. 10 illustrates an example electronic device according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

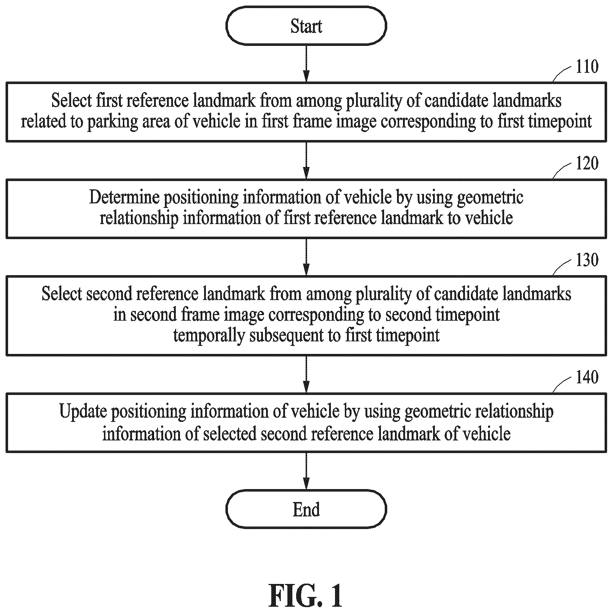

FIG. 1 illustrates an example method of determining the positioning information of a vehicle according to one or more embodiments.

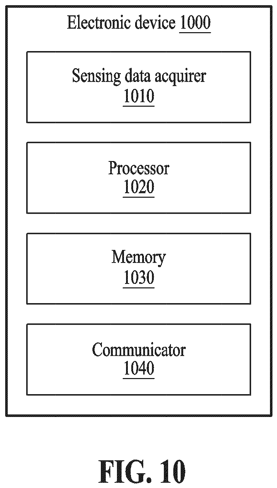

In an example, an electronic device (e.g., electronic device 1000 of FIG. 10) may determine (e.g., update) the positioning information of the vehicle by using geometric relationship information of a landmark in a plurality of frame images.

The positioning information of the vehicle may include the position information of the vehicle and the pose information of the vehicle. The position information may indicate the position of the vehicle (or a reference point of the vehicle). The pose information may indicate a direction of the vehicle (or a reference axis of the vehicle). In an example, the positioning information of the vehicle may exclude components of the vertical direction of the vehicle and may include components of the longitudinal direction of the vehicle and components of the lateral direction of the vehicle.

In an example, the positioning information of the vehicle may indicate a position and/or a pose according to a world coordinate system (e.g., an orthogonal coordinate system) determined based on the position and pose of the vehicle at a reference timepoint. The world coordinate system may be a planar coordinate system. For example, the origin of the world coordinate system may be set to the position of the vehicle at the reference timepoint. A positive direction of an x-axis of the world coordinate system may be set to a direction (e.g., the longitudinal direction of the vehicle) from the rear of the vehicle to the front of the vehicle at the reference timepoint. A positive direction of a y-axis of the world coordinate system may be set to a direction from right to left of a user (e.g., a driver sitting in the vehicle and facing the front of the vehicle) at the reference timepoint.

In an example, the electronic device may set the positioning information of the vehicle at the reference timepoint and may update the positioning information of the vehicle by using sequentially acquired frame images.

As described in greater detail below, information (e.g., the geometric relationship information of a candidate landmark) acquired from a frame image acquired by using a vision sensor may indicate a position and/or a pose according to a vehicle coordinate system. The vehicle coordinate system may be a planar coordinate system. For example, the origin of the vehicle coordinate system may be set to the position of the vehicle. A positive direction of an x-axis of the vehicle coordinate system may be set to the direction (e.g., the longitudinal direction of the vehicle) from the rear of the vehicle to the front of the vehicle. A positive direction of a y-axis of the vehicle coordinate system may be set to the direction from right to left of the user (e.g., the driver sitting in the vehicle and facing the front of the vehicle). Unlike the world coordinate system fixed to the position and pose of the vehicle at the reference timepoint, the origin and axes of the vehicle coordinate system may change as the position and pose of the vehicle changes. A coordinate conversion between the vehicle coordinate system and the world coordinate system may be performed based on the positioning information of the vehicle.

The electronic device may control the movement information of the vehicle, based on the determined (e.g., updated) positioning information of the vehicle. For example, the movement information of the vehicle may include the speed of the vehicle, the pose of the vehicle, the steering of the vehicle, and/or the gear shift of the vehicle.

Referring to FIG. 1, in a non-limiting example, in operation 110, the electronic device (e.g., electronic device 1000 of FIG. 10) may select a first reference landmark from among a plurality of candidate landmarks related to a parking area of the vehicle in a first frame image corresponding to a first timepoint.

In an example, a frame image (e.g., the first frame image, a second frame image, or a third frame image) may be acquired by processing sensing data collected by the vision sensor. The vision sensor may include, for example, one or more of a camera sensor, a radar sensor, a lidar sensor, or an ultrasonic sensor. For example, the camera sensor may generate image data as the sensing data by receiving and sensing light (e.g., light in a visible light band) reflected from a physical point. The radar sensor may generate radar data by radiating and receiving a radar signal. The lidar sensor may generate lidar data by radiating and receiving light. The ultrasonic sensor may generate ultrasonic data by radiating and receiving ultrasonic waves. The vision sensor may be mounted on the vehicle and may have a sensing range for at least a portion of a surrounding area of the vehicle. The sensing range of a sensor may refer to an area where information may be acquired by using signals (e.g., light, a radar signal, and an ultrasonic wave) radiated and/or received from the sensor.

In an example, each frame image (e.g., the first frame image, the second frame image, or the third frame image) may be acquired by processing the sensing data acquired from a plurality of vision sensors. For example, with partial images acquired by a plurality of camera sensors being processed (e.g., stitched or combined), each frame image may include an image (e.g., a bird's-eye-view (BEV) image) in which the surrounding area of the vehicle is viewed from the vertical direction (e.g., a direction perpendicularly facing the ground) of the vehicle.

However, each frame image, in an example, is not limited to including the image (e.g., the BEV image) viewed from a specific viewpoint direction (e.g., the vertical direction of the vehicle). For example, each frame image may refer to an image acquired by a vision sensor put in a viewpoint direction corresponding to the frame image. For example, each frame image may include an image captured by a single camera sensor.

In an example, the electronic device may determine a parking area for the vehicle. Each frame image (e.g., the first frame image, the second frame image, or the third frame image) may include an area corresponding to at least a portion of the parking area.

For example, the electronic device may detect a road surface marking (e.g., a parking line) defining the parking area from an image (e.g., a frame image) acquired from a sensor (e.g., the vision sensor). The electronic device may determine a candidate parking area based on the detected road surface marking. The electronic device may determine the candidate parking area as the parking area based on whether the determined candidate parking area is occupied.

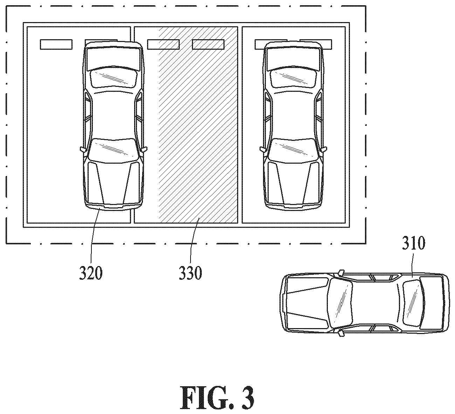

However, examples are not limited to the electronic device determining the parking area based on road surface markings, and the electronic device may determine the parking area based on an occupancy information of a space. The example of determining the parking area based on the occupancy information of a space is described in greater detail below with reference to FIG. 3.

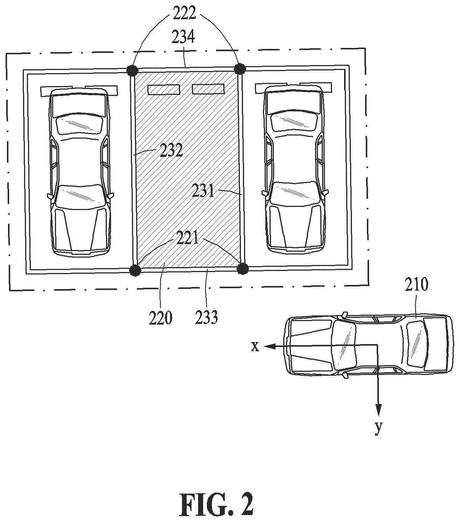

The electronic device may detect the plurality of candidate landmarks based on the determined parking area. The electronic device may determine, or calculate, scores for the detected plurality of candidate landmarks. The electronic device may determine whether to determine a candidate landmark as a reference landmark (e.g., the first reference landmark or a second reference landmark) based on a score of each candidate landmark. For example, if the score of each candidate landmark is greater than or equal to a threshold score, the electronic device may select the candidate landmark as the reference landmark. If the score of each candidate landmark is less than the threshold score of the candidate landmark, the electronic device may restrict (e.g., may not select as the reference landmark) the selection of the candidate landmark as the reference landmark. As described below in greater detail with reference to FIG. 2, the threshold score may be set differently depending on each candidate landmark or the landmark type of each candidate landmark.

In an example, the landmark may refer to a key point or a plurality of key points detected from a frame image. The candidate landmark may refer to a landmark related to the parking area and may include, for example, at least a portion of the boundary of the parking area. The reference landmark may be a landmark selected from among candidate landmarks, and the information (e.g., geometric relationship information) of the reference landmark in a frame image may be used to update the positioning information of the vehicle.

In an example, the score of a candidate landmark may refer to the degree of how reliable the geometric information of the candidate landmark in a frame image is. For example, in a frame image acquired by processing a plurality of partial images, a distortion may occur based on or resulting from a slope of a road surface where the vehicle is and/or a dynamic object placed in the sensing range. The score of a candidate landmark may indicate a distortion level and/or reliability level of a candidate landmark portion of a frame image.

For example, the electronic device may detect, as candidate landmarks, vertices of the parking area, edges of the parking area, and an object in or around the parking area and may calculate a score of each candidate landmark. The detection of the candidate landmarks and the calculation of the scores of the candidate landmarks are described in greater detail below with reference to FIG. 2.

In an example, in operation 120, the electronic device (e.g., electronic device 1000 of FIG. 10) may determine the positioning information of the vehicle by using the geometric relationship information of the first reference landmark to the vehicle.

The geometric relationship information of the reference landmark (e.g., the first reference landmark, the second reference landmark, or a third reference landmark) to the vehicle may refer to the relative position information and relative pose information of the reference landmark to the vehicle. The geometric relationship information of the reference landmark to the vehicle may be also expressed by the geometric relationship information of the reference landmark in various embodiments of the present disclosure.

The relative position information may refer to information (e.g., a direction or a distance) indicating a relative position of the reference landmark based on a specific position (e.g., the position of the vehicle from a corresponding viewpoint). The relative pose information may refer to a directional relationship (e.g., a gradient or an angle) between the specific position (e.g., the position of the vehicle from the corresponding viewpoint) and a direction determined by the reference landmark. The geometric relationship information of the reference landmark detected from a frame image corresponding to a specific viewpoint may be determined based on the position and/or direction of the vehicle at the specific viewpoint.

The position of the vehicle may be defined by a position of the reference point of the vehicle. For example, the reference point of the vehicle may include a specific point (e.g., a center point) of a rear axle of the vehicle. However, in various embodiments of the present disclosure, the reference point of the vehicle is not limited to the example where the specific point is the rear axle of the vehicle, and the reference point of the vehicle may include other points of the vehicle.

The direction of the vehicle may be defined by a direction based on the pose of the vehicle. For example, the direction based on the pose of the vehicle may include the longitudinal direction (or the heading direction of the vehicle) of the vehicle and the lateral direction of the vehicle.

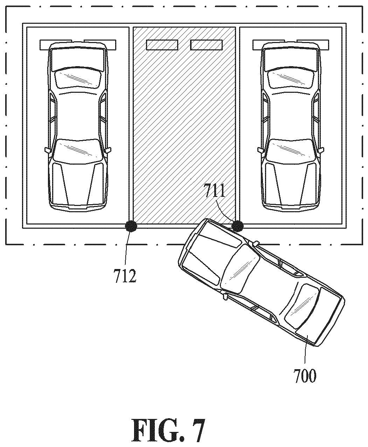

For example, if the reference landmark includes a point, the geometric relationship information of the reference landmark may include the relative position of the reference landmark based on the position of the vehicle. The geometric relationship information of the reference landmark if the reference landmark is a point is described in greater detail below with reference to FIG. 7.

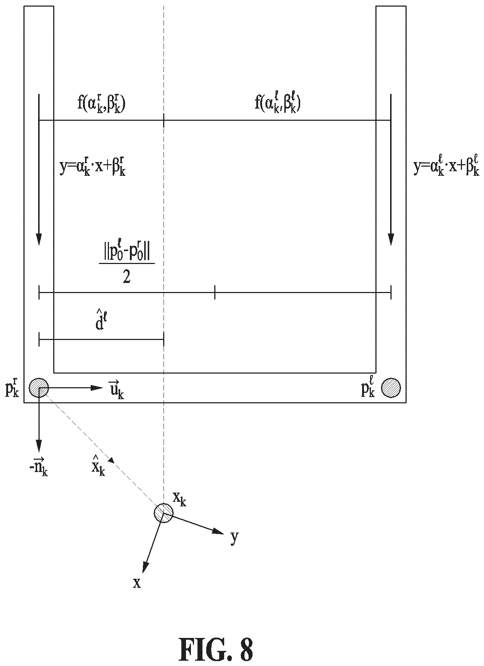

For example, if the reference landmark includes a line (e.g., a straight line or a curved line), the geometric relationship information of the reference landmark may include a distance from the position of the vehicle to the reference landmark and/or to a line determined based on the reference landmark. If the reference landmark includes a line, for example, the geometric relationship information of the reference landmark may include an angle and/or gradient between the direction of the vehicle and a direction based on the reference landmark. The geometric relationship information of the reference landmark if the reference landmark is a line is described in greater detail below with reference to FIG. 8.

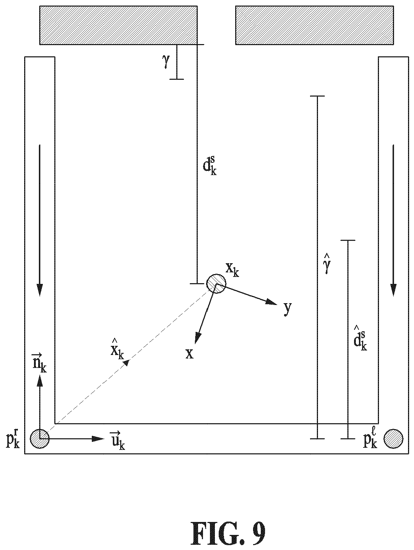

For example, if the reference landmark includes an object, the geometric relationship information of the reference landmark may include the distance from the position of the vehicle to the reference landmark. The distance from the position of the vehicle to the reference landmark may include a distance that projects the distance from the position of the vehicle to the object in a specific direction. The specific direction may be a direction determined based on the reference landmark or another reference landmark. For example, if the shape of the object is linear, the specific direction may be determined as a direction perpendicular to the object. The geometric relationship information of the reference landmark if the reference landmark is an object is described in greater detail below with reference to FIG. 9.

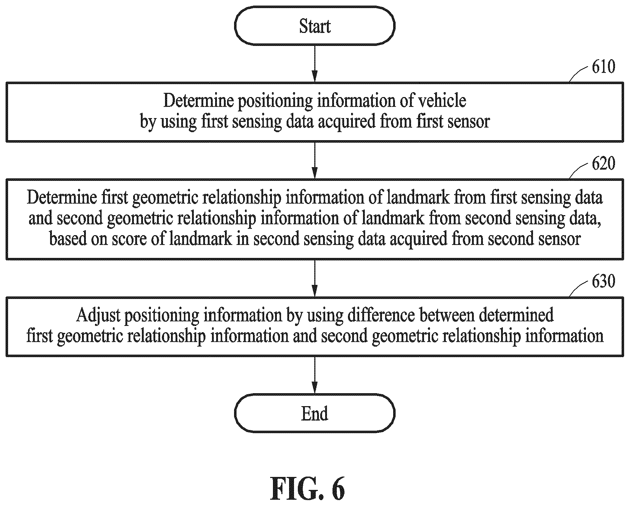

The electronic device may determine (e.g., correct or update) the positioning information of the vehicle by using the geometric relationship information of the reference landmark (e.g., the first reference landmark, the second reference landmark, or the third reference landmark). In an example, the electronic device may determine the positioning information of the vehicle by correcting the positioning information of the vehicle estimated through an inertial sensor by using the geometric relationship information of the reference landmark. The determination of the positioning information using the geometric relationship information of the reference landmark is described in greater detail below in operation 140 of FIG. 1 and with reference to FIG. 6.

In operation 130, in an example, the electronic device (e.g., electronic device 1000 of FIG. 10) may select the second reference landmark from among the plurality of candidate landmarks in the second frame image corresponding to a second timepoint temporally subsequent to the first timepoint.

The electronic device may determine the positioning information of the vehicle based on the first reference landmark selected from the first frame image and then may acquire the second frame image corresponding to the second timepoint. The electronic device may select the second reference landmark from the second frame image, similar to the selection of the first reference landmark from the first frame image. For example, the electronic device may determine (e.g., detect) at least a portion of the parking area from the second frame image. The electronic device may detect the plurality of candidate landmarks based on the parking area. The electronic device may determine scores of the plurality of candidate landmarks. The electronic device may determine the second reference landmark of the second frame image based on the scores of the plurality of candidate landmarks.

In an example, the electronic device may select a landmark that is changed from the first reference landmark as the second reference landmark by differently selecting the first reference landmark and the second reference landmark.

In an example, the electronic device may detect candidate landmarks independently from among the plurality of frame images. The electronic device may not be able to detect a candidate landmark that was detected from a frame image from another frame image because of a change of a field of view (FOV) of the frame image. In other words, a candidate landmark detected from a frame image may be different from a candidate landmark detected from another frame image. As a result, the reference landmark selected from a frame image may be different from the reference landmark selected from another frame image.

In an example, even if the electronic device commonly detects at least one candidate landmark among the plurality of candidate landmarks from the plurality of frame images, a score of the at least one candidate landmark may be determined independently among the plurality of frame images. For example, the electronic device may determine a score of a specific candidate landmark in a frame image as a first score and may determine a score of a specific candidate landmark in another frame image as a second score different from the first score. Even if the same candidate landmark is detected from each of the plurality of frame images, the electronic device may differently determine a score of the candidate landmark, and thus, the reference landmark selected from a frame image may be different from the reference landmark selected from another frame image.

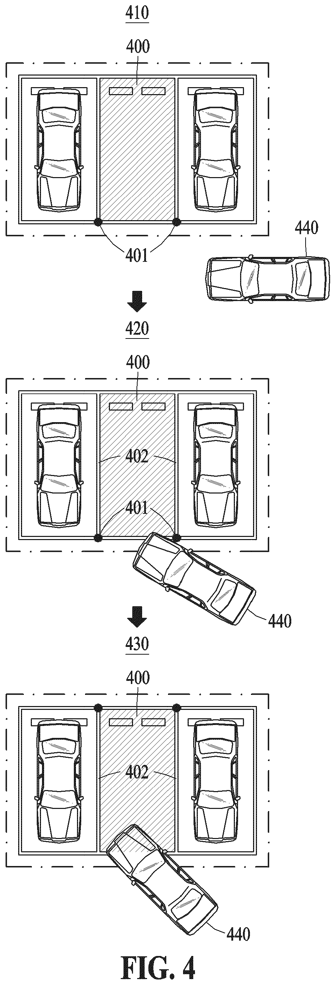

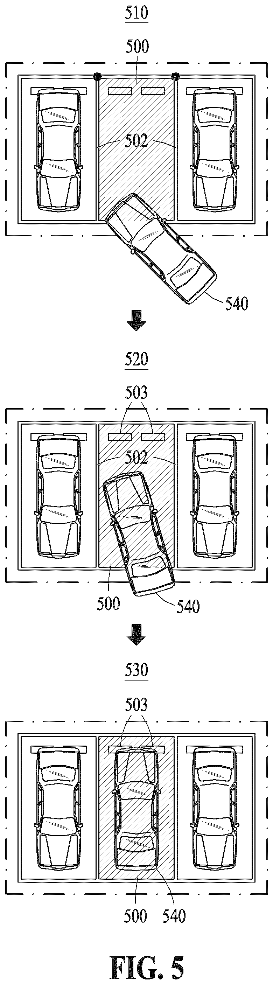

The example of the reference landmark selected from across the frame images is described in greater detail below with reference to FIGS. 4 and 5.

In an example, if less than all of the candidate landmarks are selected as the reference landmark, the electronic device may skip the determination (e.g., update) of the positioning information. For example, the electronic device may determine whether to select a candidate landmark as the second reference landmark, based on a result of comparing a score of each candidate landmark with a threshold score set for the candidate landmark, for the second frame image. The electronic device may skip the updating of the positioning information based on the second frame image, based on not all of the plurality of candidate landmarks in the second frame image being selected as the second reference landmark.

In an example, in operation 140, the electronic device (e.g., electronic device 1000 of FIG. 10) may update the positioning information of the vehicle by using the geometric relationship information of the selected second reference landmark, from the second frame image, of the vehicle.

The electronic device may determine the geometric relationship information of the second reference landmark. As described above in operation 120, the electronic device, in an example, may update the positioning information of the vehicle by using the geometric relationship information of the second reference landmark. The electronic device may update the positioning information (e.g., the positioning information, determined in operation 120, of the vehicle) on which the geometric relationship information of the first reference landmark corresponding to the first timepoint is reflected, based on the second timepoint, by using the geometric relationship information of the second reference landmark corresponding to the second timepoint.

In an example, the electronic device may determine (e.g., update) the positioning information of the vehicle based on a difference between comparison geometric relationship information and the geometric relationship information of the reference landmark (e.g., the first reference landmark or the second reference landmark). The comparison geometric relationship information may refer to the geometric relationship information of the reference landmark determined based on information acquired through the vision sensor and another sensor (e.g., the inertial sensor). The geometric relationship information of the reference landmark (e.g., the first reference landmark or the second reference landmark) may refer to the geometric relationship information of the reference landmark based on the information acquired through the vision sensor.

In other words, the geometric relationship information and comparison geometric relationship information of the reference landmark may be information determined based on data acquired through a sensor other than the vision sensor, referred to in some examples as another sensor (e.g., the inertial sensor). For example, the geometric relationship information of the reference landmark may be determined based on the information acquired through the vision sensor and may be independent of (e.g., irrelevant to) the information acquired through the inertial sensor (e.g., a sensor other than the vision sensor). The comparison geometric relationship information may be determined based on information acquired from the vision sensor and the inertial sensor (e.g., a sensor other than the vision sensor). The electronic device may correct the positioning information of the vehicle by using a difference between the geometric relationship information of the reference landmark determined through the vision sensor and the comparison geometric relationship information of the reference landmark determined through the inertial sensor.

For example, the comparison geometric relationship information may be acquired based on inertial data. The electronic device may acquire the comparison geometric relationship information by transforming the determined positioning information by using the inertial data acquired from the inertial sensor. For example, the electronic device may determine the positioning information by using the geometric relationship information of the first reference landmark of the first frame image. When acquiring the inertial data after determining the positioning information, the electronic device may acquire the comparison geometric relationship information by transforming the determined positioning information based on the inertial data. The inertial data may indicate a position change and/or pose change of the vehicle, acquired by the inertial sensor. The operation of acquiring comparison geometric relationship information by using the inertial data is described in greater detail below with reference to FIG. 6.

In an example, the electronic device may acquire the comparison geometric relationship information by using a map (e.g., a high-density (HD) map) indicating the positions of the plurality of candidate landmarks. The electronic device may acquire the comparison geometric relationship information by transforming reference geometric relationship information based on the inertial data. The reference geometric relationship information may refer to the geometric relationship information of a landmark (e.g., a candidate landmark or the reference landmark) to the vehicle at a reference timepoint (e.g., a parking start time). For example, the electronic device may determine the reference timepoint based on a determination of the parking area and/or a user's input. The electronic device may acquire the positioning information of the vehicle corresponding to the reference timepoint. The electronic device may acquire the positioning information of the vehicle at the reference timepoint by using a compass and/or a global navigation satellite system (GNSS) device (e.g., a global positioning system (GPS) device) mounted on the vehicle. The electronic device may acquire the reference geometric relationship information of each of the candidate landmarks based on a map and the positioning information of the vehicle corresponding to the reference timepoint.

In an example, the map may be stored in an internal memory of the electronic device and/or an external storage accessible by the electronic device. For example, the map may include information (e.g., a position or a pose) about candidate landmarks detected in the past (e.g., before the electronic device determined the parking area).

However, the description of the electronic device according to various examples of determining the reference geometric relationship information based on the map is mainly provided, but the examples are not limited thereto. For example, the electronic device may acquire, as the reference geometric relationship information, the geometric relationship information of a candidate landmark detected from a frame image (e.g., a reference frame image) corresponding to the reference timepoint.

FIG. 2 illustrates an example of detecting a candidate landmark and determining a score of the candidate landmark according to one or more embodiments.

Referring to FIG. 2, in a non-limiting example, an electronic device (e.g., electronic device 1000 of FIG. 10) may determine a parking area 220 for a vehicle 210. In an example, the vehicle 210 may include the electronic device (e.g., electronic device 1000 of FIG. 10). In FIG. 2, an x-axis may be the longitudinal direction of the vehicle 210 and a y-axis may be the lateral direction of the vehicle 210. FIG. 2 illustrates the vehicle 210 facing the ground in the vertical direction of the vehicle 210 and a surrounding area of the vehicle 210. For example, the electronic device may determine, as the parking area 220, a square (e.g., a rectangular) on a plane parallel to a plane defined by the x-axis and the y-axis.

In an example, based on the determined parking area 220, the electronic device may detect a plurality of candidate landmarks and may determine a score for each candidate landmark.

In an example, the electronic device may detect vertices (e.g., vertices 221 or vertices 222) of the parking area 220 as candidate landmarks. The electronic device may detect a pair of vertices corresponding to both ends of a partial boundary (e.g., a side or an edge) as a candidate landmark.

In an example, the electronic device may extract (e.g., segment) information about the vertices of the parking area 220 by applying a frame image to a vertex segmentation model. The vertex segmentation model may refer to a model generated and/or trained to detect vertices by being applied to a frame image. The vertex segmentation model may be implemented based on a machine learning model and/or a neural network (e.g., a convolutional neural network).

For example, the electronic device may detect the vertices 221 corresponding to parking entrance points of the parking area 220 as the candidate landmarks. The vertices 221 corresponding to the parking entrance points may refer to two vertices 221 that are closest to the vehicle 210 among vertices of the parking area 220. The vertices 221 corresponding to the parking entrance points may refer to the vertices 221 of an edge intersecting the vehicle 210 for the vehicle 210 to enter the parking area 220.

However, examples are not limited to the example of the electronic device detecting the vertices 221 corresponding to the parking entrance points as the candidate landmarks. The electronic device may detect other vertices as the candidate landmarks. For example, the electronic device may detect a pair of two vertices 222 that are furthest from the vehicle 210 among vertices of the parking area 220 as a candidate landmark. The electronic device may detect, as a candidate landmark, a pair of the vertices 222 of an edge parallel to another edge intersecting the vehicle 210 for the vehicle 210 to enter the parking area 220.

The electronic device may determine scores of vertices (or pairs of vertices). For example, the scores of vertices may indicate a consistency of distances between the vertices at a plurality of timepoints. The electronic device may determine the scores of the vertices based on a distance difference between a reference distance between the vertices at a reference timepoint and a distance between the vertices at a specific timepoint (e.g., a first timepoint, a second timepoint, or a third timepoint).

The electronic device may acquire the distance between the vertices at the reference timepoint as the reference distance. The electronic device may acquire the reference distance by detecting the vertices in a reference frame image and determining the distance between the vertices. However, examples are not limited thereto, and the electronic device may acquire the distance between the vertices determined from a map including the position information of the vertices as the reference distance.

For example, the electronic device may detect vertices from the reference frame image corresponding to the reference timepoint (e.g., a timepoint 0) as the candidate landmarks. The electronic device may determine a coordinate system of the vehicle 210 at the reference timepoint, that is, the coordinates of vertices according to a world coordinate system, from the reference frame image.

Equation 1:

$$\mathbf{p}_0^l = \begin{bmatrix} x_0^l \\ y_0^l \end{bmatrix}$$

$$\mathbf{p}_0^r = \begin{bmatrix} x_0^r \\ y_0^r \end{bmatrix}$$

In a non-limiting example, in Equation 1, $\mathbf{p}_0^l$ denotes the coordinates of a first vertex (e.g., a left vertex) of the reference frame image, $\mathbf{p}_0^r$ denotes the coordinates of a second vertex (e.g., a right vertex) of the reference frame image, $x_0^l$ denotes an x-coordinate of the first vertex, $y_0^l$ denotes a y-coordinate of the first vertex, $x_0^r$ denotes an x-coordinate of the second vertex $\mathbf{p}_0^r$, and $y_0^r$ denotes a y-coordinate of the second vertex $\mathbf{p}_0^r$. For reference, the coordinate system of the vehicle 210 at the reference point may be the same as the world coordinate system.

For example, the electronic device may detect vertices from a k$^{th}$ frame image corresponding to a timepoint k as the candidate landmarks. The electronic device may determine the coordinates of the vertices according to the coordinate system of the vehicle 210 from the k$^{th}$ frame image.

Equation 2:

$$\mathbf{p}_k^l = \begin{bmatrix} x_k^l \\ y_k^l \end{bmatrix}$$

$$\mathbf{p}_k^r = \begin{bmatrix} x_k^r \\ y_k^r \end{bmatrix}$$

In a non-limiting example, in Equation 2, $\mathbf{p}_k^l$ denotes the coordinates of a first vertex (e.g., a left vertex) of the kth frame image, $\mathbf{p}_k^r$ denotes the coordinates of a second vertex (e.g., a right vertex) of the k$^{th}$ frame image, $x_k^l$ denotes an x-coordinate of the first vertex $\mathbf{p}_k^l$, $y_k^l$ denotes a y-coordinate of the first vertex $\mathbf{p}_k^l$, $x_k^r$ denotes an x-coordinate of the second vertex pk, and $y_k^r$ denotes a y-coordinate of the second vertex $\mathbf{p}_k^r$.

The electronic device may determine the scores of the vertices based on the distance difference between the distances between the vertices.

Equation 3:

$$\rho_k^{\mathrm{p}} = \left| \left\| \mathbf{p}_k^l - \mathbf{p}_k^r \right\| - \left\| \mathbf{p}_0^l - \mathbf{p}_0^r \right\| \right|$$

In a non-limiting example, in Equation 3, $\rho_k^{\mathrm{p}}$ denotes scores of vertices in the k$^{th}$ frame image, $\left\| \mathbf{p}_k^l - \mathbf{p}_k^r \right\|$ denotes a distance between the vertices in the k$^{th}$ frame image, $\left\| \mathbf{p}_0^l - \mathbf{p}_0^r \right\|$ denotes the reference distance between the vertices in the reference frame image, and $\left| \left\| \mathbf{p}_k^l - \mathbf{p}_k^r \right\| - \left\| \mathbf{p}_0^l - \mathbf{p}_0^r \right\| \right|$ denotes the distance difference between the reference distance and a distance between the vertices in the k$^{th}$ frame image.

The electronic device may determine whether to select vertices as reference landmarks, based on a result of comparing scores $\rho_k^{\mathrm{p}}$ of the vertices with a vertex threshold score $thr_\mathrm{p}$. For example, when the scores $\rho_k^{\mathrm{p}}$ of the vertices are less than the vertex threshold score $thr_\mathrm{p}$, the electronic device may select the vertices as the reference landmarks. When the scores $\rho_k^{\mathrm{p}}$ of the vertices are greater than or equal to the vertex threshold score $thr_\mathrm{p}$, the electronic device may not select the vertices as the reference landmarks.

In an example, the electronic device may detect edges of the parking area 220 as the candidate landmarks. The edge of the parking area 220 may refer to at least a portion of the boundary of the parking area 220. The boundary of the parking area 220 may be divided into a plurality of partial boundaries based on a variance (e.g., a curvature) of a gradient of a tangent line at each point of the boundary. The edge may be defined by a partial boundary of the parking area 220. For example, when the parking area 220 is a polygon, the partial boundaries or edges of the parking area 220 may be defined by sides. However, although the actual parking area 220 has a polygonal shape, at least a portion of the boundary of the parking area 220 may be curved due to a distortion and/or an error in a frame image.

In an example, the electronic device may detect pairs of parallel edges (e.g., sides 231 and 232 and sides 233 and 234) from among the edges of the parking area 220 as the candidate landmarks. For example, the electronic device may detect parallel edges (e.g., the sides 231 and 232 and the sides 233 and 234) from among the edges of the parking area 220 as the candidate landmarks. When the vehicle 210 is parked in the parking area 220, the electronic device may detect edges (e.g., the sides 231 and 232) parallel to the longitudinal direction of the vehicle 210 as the candidate landmarks. For example, when the vehicle 210 is parked in the parking area 220, the electronic device may detect edges (e.g., vertical edges) (e.g., the sides 233 and 234) intersecting the longitudinal direction of the vehicle 210 as the candidate landmarks.

However, examples are not limited to the example of the electronic device detecting the pairs of parallel edges as the candidate landmarks, and the electronic device may detect a pair of edges (e.g., the sides 231 and 234) adjacent to a vertex of the parking area 220 from among the edges of the parking area 220 as a candidate landmark.

In an example, the electronic device may extract (e.g., segment) information about the edges of the parking area 220 by applying a frame image to an edge segmentation model. The edge segmentation model may refer to a model generated and/or trained to detect edges or an area corresponding to the edges by being applied to a frame image. The edge segmentation model may be implemented based on a machine learning model and/or a neural network (e.g., a convolutional neural network).

The electronic device may determine scores of edges (or pairs of edges). The scores of edges may indicate an angle between vertices. When determining the parallel edges of the parking area 220 as the candidate landmarks, the electronic device may determine the scores of the edges based on angles of the edges in a frame image.

In an example, the electronic device may detect the parallel edges 231 and 233 of the parking area 220 from the k$^{th}$ frame image as the candidate landmarks. The electronic device may model (e.g., fit or regress) each of the parallel edges to a straight line according to the coordinate system of the vehicle 210 corresponding to the k$^{th}$ timepoint.

Equation 4:

$$\mathbf{l}_k^l = \alpha_k^l x + \beta_k^l$$
$$\mathbf{l}_k^r = \alpha_k^r x + \beta_k^r$$

In a non-limiting example, in Equation 4, $\mathbf{l}_k^l$ denotes a straight line corresponding to the first side 231 (e.g., a left edge) of the $k^{th}$ frame image and $\mathbf{l}_k^r$ denotes a straight line corresponding to the second side 232 (e.g., a right edge) of the $k^{th}$ frame image.

In an example, the electronic device may determine the scores of edges based on a gradient difference between the edges, which indicates the angles between the edges. The electronic device may determine whether the number of pixels segmented into each edge exceeds a threshold pixel number. When all the number of pixels segmented into each of the parallel edges (e.g., the sides 231 and 232) exceeds the threshold pixel number, the electronic device may determine the scores of the edges based on the gradient difference of the edges. When the number of pixels segmented into at least one edge of the parallel edges (e.g., the sides 231 and 232) is less than or equal to the threshold pixel number, the electronic device may determine whether the score is a predetermined value (e.g., a value greater than or equal to a threshold score).

Equation 5:

$$\rho_k^1 = \begin{cases} \left| \arctan\left(\alpha_k^l\right) - \arctan(\alpha_k^r) \right| & if \ \left( \left| \mathbf{l}_k^l \right| > L \ \& \ \left| \mathbf{l}_k^r \right| > L \right) \\ \infty & else \end{cases}$$

In a non-limiting example, in Equation 5, $\rho_k^1$ denotes the scores of the edges (e.g., the sides 231 and 232) of the parking area 220 in the $k^{th}$ frame image, $\left| \mathbf{l}_k^l \right|$ denotes the number of pixels segmented into the first side 231, $\left| \mathbf{l}_k^r \right|$ denotes the number of pixels segmented into the second side 232, $L$ denotes the threshold pixel number used to determine whether the segmented edges are valid, $\alpha_k^l$ denotes a gradient of the first side 231, $\alpha_k^r$ denotes a gradient of the second side 232, and $\infty$ denotes the predetermined value greater than or equal to the threshold score.

In an example, the electronic device may determine whether to select edges as the reference landmarks, based on a result of comparing scores $\rho_k^1$ of the edges with an edge threshold score $thr_l$. For example, when the scores $\rho_k^1$ of the edges are less than the edge threshold score $thr_l$, the electronic device may select the edges as the reference landmarks. When the scores $\rho_k^1$ of the edges are greater than or equal to the edge threshold score $thr_l$, the electronic device may not select the edges as the reference landmarks.

In an example, the electronic device may detect an object in or around the parking area 220 as a candidate landmark. The object may refer to an object having a height greater than or equal to a threshold height in a vertical direction. The object in the parking area 220 may include, for example, a car stopper. The object around the parking area 220 may include a pillar or a flower bed.

The electronic device may segment an area corresponding to the object in or around the parking area 220 by applying the $k^{th}$ frame image to an object segmentation model. The object segmentation model may refer to a model generated and/or trained to detect the object (e.g., a predetermined object) by being applied to a frame image. The object segmentation model may be implemented based on a machine learning model and/or a neural network (e.g., a convolutional neural network).

The electronic device may determine a score of the object based on an angle of the vehicle 210 to the parking area 220 in the frame image (e.g., a first frame image, a second frame image, or a third frame image). In an example, when the height of the object in the vertical direction of the vehicle 210 is greater than or equal to a threshold height, as the angle of the vehicle 210 to the parking area 220 increases, distortion in the object in the frame image may increase. The electronic device may use the angle of the vehicle 210 relative to the parking area 220 to indicate the degree of distortion in the frame image.

In an example, the electronic device may determine the score of the object based on an average gradient of the parallel edges (e.g., sides 231 and 232) among the edges of the parking area 220. When the vehicle 210 is parked in the parking area 220, the parallel edges may include edges parallel to the longitudinal direction of the vehicle 210. When the number of pixels segmented into the object exceeds the threshold pixel number, the electronic device may determine the score of the object based on the average gradient of the parallel edges of the parking area 220. When the number of pixels segmented into the object is less than or equal to the threshold pixel number, the electronic device may determine the score of the object to the predetermined value (e.g., the value greater than or equal to the threshold score).

Equation 6:

$$\rho_k^{\mathbf{s}} = \begin{cases} \dfrac{\left|\arctan\left(\alpha_k^l\right) + \arctan\left(\alpha_k^r\right)\right|}{2} & if \ (\mathbf{s} > S) \\ \infty & else \end{cases}$$

In a non-limiting example, in Equation 6, $\rho_k^{\mathbf{s}}$ denotes the score of the object in the kth frame image, **s** denotes the number of pixels segmented into the object, $S$ denotes a threshold number used to determine whether the segmented object is valid, $\alpha_k^l$ denotes the gradient of the first side 231, $\alpha_k^r$ denotes the gradient of the second side 232, and $\infty$ denotes the predetermined value greater than or equal to the threshold score.

In an example, the electronic device may determine whether to select the object as a reference landmark, based on a result of comparing the score $\rho_k^{\mathbf{s}}$ of the object with an object threshold score $thr_s$. For example, when the score $\rho_k^{\mathbf{s}}$ of the object is less than the object threshold score $thr_s$, the electronic device may select the object as the reference landmark. When the score $\rho_k^{\mathbf{s}}$ of the object is greater than or equal to the object threshold score $thr_s$, the electronic device may not select the object as the reference landmark.

FIG. 3 illustrates an example of determining a parking area according to one or more embodiments.

Referring to FIG. 3, in a non-limiting example, the electronic device (e.g., electronic device 1000 of FIG. 10) of a vehicle 310 may determine a parking area. The electronic device may determine the parking area among areas occupiable by the vehicle 310 of a space around the vehicle 310 based on the occupancy information of the space around the vehicle 310 and the volume information of the vehicle 310.

In an example, the volume information of the vehicle 310 may include information about a space occupied by the vehicle 310. For example, the volume information of the vehicle 310 may include the size information of a solid bounding box (e.g., a three-dimensional bounding box) surrounding the vehicle 310. The size information of the solid bounding box may include the longitudinal length and lateral length of the vehicle 310. The size information of the solid bounding box may further include a vertical length.

In an example, the occupancy information of the space around the vehicle 310 may include an occupancy state of the space around the vehicle. For example, the occupancy information may indicate whether a unit space is occupied or unoccupied for each of a plurality of unit spaces (e.g., voxels) into which the space around the vehicle 310 is divided. For example, the occupancy information may indicate a state of each unit space as one of occupied, unoccupied, or unknown.

In an example, the occupancy information may be determined based on data acquired by a sensor (e.g., vision sensor) mounted on the vehicle 310. However, examples are not limited to the occupancy information being determined based on the data acquired by the sensor mounted on the vehicle 310, and the occupancy information may be received from a server that manages the space around the vehicle.

In an example, as illustrated in FIG. 3, another vehicle 320 may be parked, invading or crossing over a parking line as defined by road markings. The electronic device may determine a space occupiable by the vehicle 310, excluding an area occupied by an object (e.g., the other vehicle 320), in the space around the vehicle 310. The electronic device may determine the parking area based on a result of comparing the volume information of the vehicle 310 with the occupiable space. For example, the electronic device may determine an area 330 as the parking area when the area, excluding a space occupied by the other vehicle 320 of an area defined by road markings may cover or is otherwise spacious enough to contain the volume information of the vehicle 310. In this case, a partial boundary (e.g., a side) of the parking area may be determined based on the other vehicle 320.

FIG. 4 illustrates an example of changing a reference landmark across a plurality of timepoints according to one or more embodiments.

Referring to FIG. 4, in a non-limiting example, the electronic device (e.g., electronic device 1000 of FIG. 10) may update the positioning information of a vehicle 440 by using a plurality of frame images corresponding to the plurality of timepoints according to the parking of the vehicle 440. As described above with reference to FIG. 1, reference landmarks selected from respective frame images may differ. For example, before the vehicle 440 enters a parking area 400, the electronic device may determine vertices 401 of the parking area 400 as reference landmarks. As the vehicle 440 enters the parking area 400, the electronic device may further determine edges 402 of the parking area 400 together with the vertices 401 of the parking area 400 as the reference landmarks. When the vehicle 440 further enters the parking area 400, the electronic device may only determine the edges 402 of the parking area 400 as the reference landmarks without determining the vertices 401 of the parking area 400 as the reference landmarks.

The electronic device may acquire a first frame image corresponding to a first timepoint 410. At the first timepoint 410, as illustrated in FIG. 4, the vehicle 440 may not have entered the parking area 400.

The electronic device may select the vertices 401 of the parking area 400 in the first frame image as a first reference landmark. For example, the electronic device may detect the vertices 401 of the parking area 400 in the first frame image. The electronic device may determine scores of the vertices 401. The electronic device may determine the vertices 401 as the first reference landmark, based on determining the scores of the vertices 401 to be less than a vertex threshold score. The electronic device may detect at least some of the edges 402 of the parking area 400 in the first frame image. The electronic device may determine scores of the edges 402. The electronic device may exclude (e.g., not select) the edges 402 from the first reference landmark, based on determining the scores of the edges 402 to be greater than or equal to an edge threshold score.

The electronic device may acquire a second frame image corresponding to a second timepoint 420. At the second timepoint 420, as illustrated in FIG. 4, the vehicle 440 may have started to enter the parking area 400.

The electronic device may select the vertices 401 of the parking area 400 in the second frame image and the edges 402 of the parking area 400 in the second frame image as a second reference landmark. For example, the electronic device may further select the edges 402 of the parking area 400 as the reference landmarks. For example, the electronic device may detect the vertices 401 of the parking area 400 in the second frame image. The electronic device may determine scores of the vertices 401. The electronic device may determine the vertices 401 as the second reference landmark, based on determining the scores of the vertices 401 to be less than the vertex threshold score. The electronic device may detect at least some of the edges 402 of the parking area 400 in the second frame image. The electronic device may determine scores of the edges 402. The scores of edges 402 may decrease at the second timepoint 420 compared to the first timepoint 410. The electronic device may select the edges 402 as the second reference landmark, based on determining the scores of the edges 402 to be less than the edge threshold score.

The electronic device may acquire a third frame image corresponding to a third timepoint 430. At the third timepoint 430, as illustrated in FIG. 4, the vehicle 440 may be further into the parking area 400 than at the second timepoint 420.

The electronic device may exclude the vertices 401 of the parking area 400 in the third frame image from a third reference landmark, based on acquiring the third frame image corresponding to the third timepoint 430 temporally subsequent to the second timepoint 420. For example, the electronic device may detect the vertices 401 of the parking area 400 in the third frame image. The electronic device may determine scores of the vertices 401. The scores of the vertices 401 may increase at the third timepoint 430 compared to at the first timepoint 410 and/or the second timepoint 420. The electronic device may exclude (e.g., not select) the vertices 401 from the third reference landmark, based on determining the scores of the vertices 401 to be greater than or equal to the vertex threshold score. The electronic device may detect at least some of the edges 402 of the parking area 400 in the third frame image. The electronic device may determine scores of the edges 402. The electronic device may select the edges 402 as the third reference landmark, based on determining the scores of the edges 402 to be less than the edge threshold score.

FIG. 5 illustrates an example of changing a reference landmark across a plurality of timepoints according to one or more embodiments.

Referring to FIG. 5, in a non-limiting example, the electronic device (e.g., electronic device 1000 of FIG. 10) may update the positioning information of a vehicle 540 by using a plurality of frame images corresponding to the plurality of timepoints according to the parking of the vehicle 540. For example, when the vehicle 540 is entering a parking area 500, the electronic device may determine edges 502 of the parking area 500 as reference landmarks. As the vehicle 540 further enters the parking area 500, the electronic device may further determine an object 503 in the parking area 500 together with the edges 502 of the parking area 500 as the reference landmarks. When the parking of the vehicle 540 is at least substantially completed, the electronic device may only determine the object 503 in the parking area 500 as a reference landmark without determining the edges 502 of the parking area 500 as the reference landmarks.

In an example, the electronic device may acquire a first frame image corresponding to a first timepoint 510. At the first timepoint 510, as illustrated in FIG. 5, a part of the vehicle 540 may have entered the parking area 500. The first timepoint 510 of FIG. 5 may substantially correspond to the third timepoint 430 of FIG. 4.

The electronic device may select the edges 502 of the parking area 500 in a first frame image as a first reference landmark. For example, the electronic device may detect the edges 502 of the parking area 500 in the first frame image. The electronic device may determine scores of the edges 502. The electronic device may determine the edges 502 as the first reference landmark, based on determining the scores of the edges 502 to be less than an edge threshold score. The electronic device may detect at least some (i.e., a portion) of the object 503 in the parking area 500 in the first frame image. The electronic device may determine a score of the object 503. The electronic device may exclude (e.g., not select) the object 503 from the first reference landmark, based on determining the score of the object 503 to be greater than or equal to an object threshold score.

In an example, the electronic device may acquire a second frame image corresponding to a second timepoint 520. At the second timepoint 520, as illustrated in FIG. 5, the vehicle 540 may be further into the parking area 500 than at the first timepoint 510.

The electronic device may select the edges 502 of the parking area 500 in the second frame image and the object 503 in or around the parking area 500 in the second frame image as a second reference landmark. For example, the electronic device may further select the object 503 in or around the parking area 500 as a reference landmark. For example, the electronic device may detect the edges 502 of the parking area 500 in the second frame image. The electronic device may determine scores of the edges 502. The electronic device may determine the edges 502 as the second reference landmark, based on determining the scores of the edges 502 to be less than an edge threshold score. The electronic device may detect at least some of the object 503 in the parking area 500 in the second frame image. The electronic device may determine a score of the object 503. The score of the object 503 may decrease at the second timepoint 520 compared to the first timepoint 510. The electronic device may select the object 503 as the second reference landmark, based on determining the score of the object 503 to be less than the object threshold score.

In an example, the electronic device may acquire a third frame image corresponding to a third timepoint 530. At the third timepoint 530, as illustrated in FIG. 5, the vehicle 540 may be further into the parking area 500 than at the second timepoint 520.

The electronic device may exclude the edges 502 of the parking area 500 in the third frame image from a third reference landmark, based on acquiring the third frame image corresponding to the third timepoint 530 temporally subsequent to the second timepoint 520. For example, the electronic device may detect the edges 502 of the parking area 500 in the third frame image. The electronic device may determine scores of the edges 502. The scores of the edges 502 may increase at the third timepoint 530 compared to at the first timepoint 510 and/or the second timepoint 520. The electronic device may exclude (e.g., not select) the edges 502 from the third reference landmark, based on determining the scores of the edges 502 to be greater than or equal to the edge threshold score. The electronic device may detect at least some (i.e., a portion) of the object 503 in or around the parking area 500 in the third frame image. The electronic device may determine a score of the object 503. The electronic device may select the object 503 as the third reference landmark, based on determining the score of the object 503 to be less than the object threshold score.

In an example, for ease of description, FIGS. 4 and 5 are separately described, but descriptions are not limited thereto. For example, the first timepoint 410 of FIG. 4, the second timepoint 420 of FIG. 4, the third timepoint 430 of FIG. 4, the second timepoint 520 of FIG. 5, and the third timepoint 530 of FIG. 5 may have a temporally sequential relationship. The third timepoint 430 of FIG. 4 may be substantially the same or correspond to the first timepoint 510 of FIG. 5, for example.

In conclusion, according to parking progress, the electronic device may use, as a reference landmark, the vertices 401 of the parking areas 400 or 500, the edges 402 or 502 of the parking areas 400 or 500, and the object 503 in or around the parking area 400 or 500. For example, the electronic device may use the vertices 401 of the parking area 400 or 500 as the reference landmark at a parking start time. Then, according to the parking progress, the electronic device may further use, as the reference landmark, the edges 402 or 502 of the parking area 400 or 500 together with the vertices 401 of the parking area 400 or 500. Then, according to the parking progress, the electronic device may stop using the vertices 401 of the parking area 400 or 500 as the reference landmark. Then, according to the parking progress, the electronic device may use the object 503 in or around the parking area 400 or 500 together with the edges 402 or 502 of the parking area 400 or 500 as the reference landmark. According to the parking progress, the electronic device may stop using the edges 402 or 502 of the parking area 400 or 500 as the reference landmark. In the final stage of parking, the electronic device may update the vehicle's 540 positioning information by using the object 503 in or around the parking area 400 or 500 as the reference landmark.

FIG. 6 illustrates an example of determining the positioning information of a vehicle by using sensing data collected through a plurality of sensors according to one or more embodiments.

Referring to FIG. 7, in a non-limiting example, the electronic device (e.g., electronic device 1000 of FIG. 10) may determine (e.g., update) the positioning information of the vehicle (e.g., vehicles 440 and 540 of FIGS. 4 and 5) by using the sensing data acquired from the plurality of sensors.

In an example, the positioning information $\mathbf{x}_k$ of the vehicle may be expressed as shown below in Equation 7.

Equation 7:

$$\mathbf{x}_k = \begin{bmatrix} x_k \\ y_k \\ \theta_k \end{bmatrix}$$

In a non-limiting example, in Equation 7, $\mathbf{x}_k$ denotes the positioning information of the vehicle corresponding to a $k^{th}$ timepoint, $x_k$ denotes an x-coordinate indicating a position of the vehicle at the $k^{th}$ timepoint, $y_k$ denotes a y-coordinate indicating the position of the vehicle at the $k^{th}$ timepoint, and $\theta_k$ denotes a rotation angle of the vehicle from a reference axis (e.g., an x-axis). As described below, an index (e.g., k) of the positioning information of the vehicle corresponds to a sampling timepoint of a specific sensor (e.g., a vision sensor), and the index may be updated when the sensing data (e.g., a frame image) is completely processed. A sampling period of another sensor (e.g., an inertial sensor) may be shorter than a sampling period of the specific sensor, and the determination and/or update of the positioning information performed in response to the sensing data acquired based on the other sensor (e.g., the inertial sensor) may be independent of a change of the index.

In an example, the electronic device may determine (e.g., initialize) the positioning information of the vehicle at a reference timepoint as shown in Equation 8 below.

Equation 8:

$$\mathbf{x}_0 = \begin{bmatrix} 0 \\ 0 \\ 0 \end{bmatrix}$$

In an example, the positioning information of the vehicle may be expressed based on a world coordinate system. As described above with reference to FIG. 1, the origin of the world coordinate system may be set to the position of the vehicle at the reference timepoint. A positive direction of an x-axis of the world coordinate system may be set to a direction (e.g., the longitudinal direction of the vehicle) from the rear of the vehicle to the front of the vehicle at the reference timepoint. A positive direction of a y-axis of the world coordinate system may be set to a direction from right to left of a user (e.g., a driver sitting in the vehicle and facing the front of the vehicle) at the reference timepoint.

The electronic device may update the positioning information of the vehicle at the reference timepoint by using the sensing data acquired from the plurality of sensors and may determine the positioning information of the vehicle.

In an example, in operation 610, the electronic device (e.g., electronic device 1000 of FIG. 10) may determine the positioning information of the vehicle by using first sensing data acquired from a first sensor.

The first sensor may include the inertial sensor. The inertial sensor may refer to a sensor that measures inertial force. For example, the inertial sensor may include a sensor that measures the speed, angular velocity, direction, gravity, acceleration, and/or angular acceleration of a moving object. For example, the inertial sensor may be implemented as at least a part of an inertial measurement unit (IMU).

In an example, the inertial sensor may include an accelerometer and/or a gyro sensor. The accelerometer may sense and measure acceleration applied to an object. For example, the accelerometer may measure acceleration with respect to three axes (e.g., the x-axis, the y-axis, and the z-axis). Since the accelerometer, when in a stationary state, senses acceleration in a gravitational direction, the accelerometer may measure acceleration as much as gravitational acceleration g in a perpendicular direction to the ground. A gyro sensor (also referred to as a gyroscope) may measure angular velocity by converting Coriolis force generated by a rotational movement into an electrical signal.

The first sensing data may include variance information of the positioning information of the vehicle. The variance of the vehicle's positioning information may include a variance in time, speed, and angular velocity. The variance in time may refer to a temporal length from a previous sampling timepoint of the first sensing data to a current sampling timepoint of the first sensing data.

The electronic device may update the positioning information of the vehicle in response to the first sensing data being acquired. For example, the electronic device may update the positioning information by converting the positioning information of the vehicle by using the variance information.

For example, the vehicle's positioning information may be updated based on the first sensing data as shown below in Equation 9.

Equation 9:

$$\mathbf{x_k} \leftarrow \mathbf{x_k} + \begin{bmatrix} v_k \cdot \cos(\theta_k) \cdot dt \\ v_k \cdot \sin(\theta_k) \cdot dt \\ \omega_k \cdot dt \end{bmatrix}$$

In a non-limiting example, in Equation 9, $dt$ denotes a variance in time, $v_k$ denotes speed, and $\omega_k$ denotes angular velocity.

In an example, in operation 620, the electronic device (e.g., electronic device 1000 of FIG. 10) may determine first geometric relationship information of a landmark from the first sensing data and second geometric relationship information of the landmark from second sensing data, based on a score of the landmark in the second sensing data acquired from a second sensor. For example, the second sensor may include the vision sensor.

The first geometric relationship information may refer to the geometric relationship information of the landmark determined based on the second sensing data (also expressed by inertial data in various examples herein) acquired from the inertial sensor. For example, the first geometric relationship information may refer to the geometric relationship information of the landmark determined based on the inertial data. For reference, since the first geometric relationship information is the geometric relationship information of the landmark determined based on the inertial data, the first geometric relationship information may correspond to the comparison geometric relationship information as stated above with reference to FIGS. 1 to 5.

The second geometric relationship information may refer to the geometric relationship information of the landmark determined based on the second sensing data (also expressed by an image or a frame image in various embodiments herein) acquired from the vision sensor. For example, the second geometric relationship information may refer to the geometric relationship information of the landmark determined in the image. For reference, since the second geometric relationship information is the geometric relationship information of the landmark determined based on the image, the second geometric relationship information may correspond to the geometric relationship information of the specific timepoint (e.g., the first timepoint, the second timepoint, and the third timepoint) as stated above with reference to FIGS. 1 to 5.

In an example, the electronic device may acquire the image (e.g., the frame image) based on the second sensing data. The electronic device may detect the landmark from the image. The electronic device may determine a score of the landmark detected from the image. The electronic device may determine the second geometric relationship information based on the score.

As described above with reference to FIG. 1, the image may include an image (e.g., a BEV image) viewing a surrounding area of the vehicle from a vertical direction (e.g., a direction perpendicularly facing the ground) by processing (e.g., stitching or combining) partial images acquired by a plurality of camera sensors, but examples are not limited thereto. Each image may refer to an image acquired by the vision sensor placed in a viewpoint direction corresponding to the image.

As described above with reference to FIGS. 1 to 5, the electronic device, according to an example, may determine a parking area for the vehicle. The electronic device may detect the landmark based on the parking area. Since the determination of the parking area and the detection of the landmark are the same as elements described with reference to FIGS. 1 to 5, repeated descriptions are omitted.

In an example, the electronic device may determine, based on the score of the landmark detected from the second sensing data, whether to determine the first geometric relationship information and the second geometric relationship information and whether to adjust the positioning information. For example, if the score of the landmark is less than a threshold score, the electronic device may determine the first geometric relationship information and the second geometric relationship information and may adjust the positioning information. For example, if the score of the landmark is greater than or equal to the threshold score, the electronic device may skip the determination of the first geometric relationship information and the second geometric relationship information and/or the adjustment of the positioning information based on the second geometric relationship information.

As described above, the landmark may be determined as vertices of the parking area, edges of the parking area, and/or an object in or around the parking area. The operation of determining the first and second geometric relationship information of each landmark is described in greater detail below with reference to FIGS. 7 to 10.

In an example, in operation 630, the electronic device (e.g., electronic device 1000 of FIG. 10) may adjust the positioning information by using a difference between the determined first geometric relationship information and second geometric relationship information.

The electronic device may adjust the positioning information by using the difference between the first geometric relationship information and the second geometric relationship information being applied through, for example, an extended Kalman filter (EKF) as discussed in greater detail below with reference to Equation 10.

Equation 10:

$$\mathbf{x}_{k+1} = \mathbf{x}_k + K_k \cdot (\boldsymbol{z}_k - \hat{\boldsymbol{z}}_k)$$

$$K_k = P_k^- \cdot H_k^T \cdot \left(H_k P_k^- H_k^T + R_k\right)^{-1}$$

$$\mathbf{P}_{k+1}^- = \boldsymbol{A}_k \cdot \boldsymbol{P}_k \cdot \boldsymbol{A}_k^T + \boldsymbol{Q}$$

$$\boldsymbol{A}_k = \begin{bmatrix} 1 & 0 & -v_k \cdot \sin(\theta_k) \cdot dt \\ 0 & 1 & v_k \cdot \cos(\theta_k) \cdot dt \\ 0 & 0 & 1 \end{bmatrix}$$

$$P_0 = \begin{bmatrix} 0 & 0 & 0 \\ 0 & 0 & 0 \\ 0 & 0 & 0 \end{bmatrix}$$

In a non-limiting example, in equation 10, $\mathbf{x}_{k+1}$ denotes the positioning information of the vehicle at a k+1th timepoint, and $\mathbf{x}_k$ denotes the positioning information of the vehicle at the $k^{th}$ timepoint. $\hat{\boldsymbol{z}}_k$ denotes the first geometric relationship information, and $\boldsymbol{z}_k$ denotes the second geometric relationship information. $K_k$ denotes a Kalman filter gain,

$P_k^-$ denotes an error in the positioning information $\mathbf{x}_k$ of the vehicle before being adjusted based on the image, $\mathbf{Q}$ denotes a value set for an error in the inertial data, $\mathbf{A}_k$ denotes coefficients to linearly express the update of the vehicle's positioning information based on the inertial data, and $H_k$ denotes a value determined according to each landmark. $H_k$ is described in greater detail below with reference to FIGS. 7 to 9.

As described above with reference to FIGS. 1 to 5, in an example, the electronic device may detect a plurality of candidate landmarks and may determine a reference landmark to be used to determine (e.g., adjust or update) the positioning information among the plurality of candidate landmarks. For example, the electronic device may detect the plurality of candidate landmarks from the image. The electronic device may determine scores of the plurality of candidate landmarks in the image. The electronic device may determine the reference landmark, among the plurality of candidate landmarks, based on the scores of the plurality of candidate landmarks. The electronic device may adjust the positioning information based on the difference between the first geometric relationship information and the second geometric relationship information corresponding to each reference landmark. Since the detection of the candidate landmarks, the determination of the scores of the candidate landmarks, and the selection of the reference landmark are the same as the elements described above with reference to FIGS. 1 to 5, repeated descriptions are omitted.

FIG. 7 illustrates an example of determining the first geometric relationship information and second geometric relationship information of vertices of a parking area according to one or more embodiments.

Referring to FIG. 7, in a non-limiting example, the electronic device (e.g., electronic device 1000 of FIG. 10) which may be provided in a vehicle 700 may detect vertices 711 and 712 of the parking area as landmarks (or candidate landmarks). The electronic device may determine scores of the vertices 711 and 712. As described above with reference to FIG. 2, the electronic device may determine the scores of the vertices 711 and 712 based on the distance difference between a reference distance and a distance between the vertices 711 and 712 in an image frame. The electronic device may determine the first geometric relationship information and second geometric relationship information of the vertices 711 and 712, based on the scores of the vertices 711 and 712 are less than a vertex threshold score.

The electronic device may determine a position of each vertex in first sensing data as the first geometric relationship information. The position of each vertex in the first sensing data may be expressed by coordinates according to a vehicle coordinate system. For example, when an image corresponds to a $k^{th}$ timepoint, the first geometric relationship information of the vertices 711 and 712 according to the vehicle coordinate system at the kth timepoint may be expressed as shown below in Equation 11.

Equation 11:

$$\hat{\mathbf{z}}_k^{\mathrm{p}} = \begin{bmatrix} \left(x_0^l - x_k\right) \cdot \cos(-\theta_k) - \left(y_0^l - y_k\right) \cdot \sin(-\theta_k) \\ \left(x_0^l - x_k\right) \cdot \sin(-\theta_k) + \left(y_0^l - y_k\right) \cdot \cos(-\theta_k) \\ \left(x_0^r - x_k\right) \cdot \cos(-\theta_k) - \left(y_0^r - y_k\right) \cdot \sin(-\theta_k) \\ \left(x_0^r - x_k\right) \cdot \sin(-\theta_k) + \left(y_0^r - y_k\right) \cdot \cos(-\theta_k) \end{bmatrix}$$

In a non-limiting example, in Equation 11, similar to Equation 1, $x_0^l$ denotes an x-coordinate of a first vertex 711 (e.g., a left vertex) according to a world coordinate system, $y_0^l$ denotes a y-coordinate of the first vertex 711 according to the world coordinate system, $x_0^r$ denotes an x-coordinate of a second vertex 712 (e.g., a right vertex) according to the world coordinate system, and $y_0^r$ denotes a y-coordinate of the second vertex 712 according to the world coordinate system.

Similar to Equation 7, in the world coordinate system, $x_k$ as shown above, for example, Equation 11 denotes the x-coordinate indicating a position of a vehicle 700 at the kth timepoint, $y_k$ denotes the y-coordinate indicating the position of the vehicle 700 at the kth timepoint, and $\theta_k$ denotes a rotation angle of the vehicle 700 from a reference axis (e.g., an x-axis).

In Equation 11, $\hat{\mathbf{z}}_k^{\mathrm{p}}$ denotes the first geometric relationship information of the vertices 711 and 712 and may include coordinates of the first vertex 711 and the second vertex 712 on which a coordinate system conversion is performed from the world coordinate system to the vehicle coordinate system at the $k^{th}$ timepoint. For the conversion from the world coordinate system to the vehicle coordinate system, the electronic device may perform parallel translation on the coordinates of the first vertex 711 and the second vertex 712 according to the world coordinate system based on the position information (e.g., as much as $x_k$ in the x-axis and $y_k$ in a y-axis) of the vehicle 700 at the $k^{th}$ timepoint, and then may perform rotation based on the posture information (e.g., as much as $-\theta_k$) of the vehicle 700.

In an example, the electronic device may determine the position of each vertex in the second sensing data as the second geometric relationship information. Similar to the position of each vertex in the first sensing data, the position of each vertex in the second sensing data may be expressed by the coordinates according to the vehicle coordinate system. For example, when an image corresponds to the $k^{th}$ timepoint, the first geometric relationship information of the vertices 711 and 712 according to the vehicle coordinate system at the kth timepoint may be expressed as shown below in Equation 12.

Equation 12:

$$\mathbf{z}_k^{\mathrm{p}} = \begin{bmatrix} x_k^l \\ y_k^l \\ x_k^r \\ y_k^r \end{bmatrix}$$

In a non-limiting example, in Equation 12, zk denotes the second geometric relationship information of the vertices 711 and 712, $x_k^l$ and $y_k^l$ respectively denote the x-coordinate and the y-coordinate of the first vertex 711 (e.g., the left vertex) according to the vehicle coordinate system at the $k^{th}$ timepoint, and $x_k^r$ and $y_k^r$ respectively denote the x-coordinate and the y-coordinate of the second vertex 712 (e.g., the right vertex) according to the vehicle coordinate system at the $k^{th}$ timepoint.

The electronic device may adjust the positioning information of the vehicle based on the difference between the first geometric relationship information and second geometric relationship information of the vertices 711 and 712.

In an non-limiting example, the electronic device may adjust the vehicle's positioning information based on Equation 13 as shown below.

Equation 13:

$$\mathbf{x}_{k+1} = \mathbf{x}_k + K_k \cdot \left( \mathbf{z}_k^{\mathrm{p}} - \hat{\mathbf{z}}_k^{\mathrm{p}} \right)$$

$$H_k = H_k^{\mathrm{p}} = \begin{bmatrix} -\cos(-\theta_k) & -\sin(-\theta_k) & \left(x_0^l - x_k\right) \cdot \sin(-\theta_k) + \left(y_0^l - y_k\right) \cdot \cos(-\theta_k) \\ -\sin(-\theta_k) & -\cos(-\theta_k) & -\left(x_0^l - x_k\right) \cdot \cos(-\theta_k) + \left(y_0^l - y_k\right) \cdot \sin(-\theta_k) \\ -\cos(-\theta_k) & -\sin(-\theta_k) & \left(x_0^r - x_k\right) \cdot \sin(-\theta_k) + \left(y_0^r - y_k\right) \cdot \cos(-\theta_k) \\ -\sin(-\theta_k) & -\cos(-\theta_k) & -\left(x_0^r - x_k\right) \cdot \cos(-\theta_k) + \left(y_0^r - y_k\right) \cdot \sin(-\theta_k) \end{bmatrix}$$

FIG. 8 illustrates an example of determining the first geometric relationship information and second geometric relationship information of edges of a parking area according to one or more embodiments.

In an example, the electronic device may detect edges of the parking area as landmarks (or candidate landmarks). The electronic device may determine the scores of the edges. As described above with reference to FIG. 2, the electronic device may detect the scores of the edges based on the angles of the edges. The electronic device may determine the first geometric relationship information and second geometric relationship information of the edges, based on the scores of the edges being less than an edge threshold score.

The electronic device may determine the relative position of the edges to a vehicle in first sensing data and the angles between the vehicle and the edges as the first geometric relationship information. The electronic device may determine the relative position of the edges to the vehicle in second sensing data and the angles between the vehicle and the edges as the second geometric relationship information.

The relative position of the edges to the vehicle may include a distance from the center line of the edges to a position of the vehicle. For example, the relative position may include a length obtained by projecting the distance from the center line of the edges to the position of the vehicle onto a partial boundary (e.g., one side) of the parking area.

The angles between the vehicle and the edges may include an angle between the vehicle's heading direction and a representative direction of the edges. The representative direction of the edges may be determined based on the respective directions of the edges.

Referring to FIG. 8, in a non-limiting example, the first geometric relationship information of the edges may be determined based on Equation 14 as shown below.

Equation 14:

$$\hat{\mathbf{z}}_k^l = \begin{bmatrix} \left( \hat{d}^l - \dfrac{\|\mathbf{p}_0^l - \mathbf{p}_0^r\|}{2} \right) \cdot \vec{\mathbf{u}}_k \\ atan2\left( y_0^l - y_0^r, -\left( x_0^l - x_0^r \right) \right) - \theta_k \end{bmatrix}$$

$$\hat{d}^l = (\vec{\mathbf{u}}_k)^T \cdot \hat{x}_k$$

$$\vec{\mathbf{u}}_k = \frac{\mathbf{p}_k^l - \mathbf{p}_k^r}{\|\mathbf{p}_k^l - \mathbf{p}_k^r\|}$$

$$\hat{x}_k = \begin{bmatrix} x_k - x_k^r \\ y_k - y_k^r \end{bmatrix}$$

In a non-limiting example, in Equation 14, $\hat{\mathbf{z}}_k^l$ denotes the first geometric relationship information of the edges of the parking area, and $\hat{d}^l$ denotes the length obtained by projecting the distance from the center line of the edges to the position of the vehicle onto the partial boundary (e.g., one side) of the parking area and the positional relationship between the edges and the vehicle.

Similar to equation 1, in Equation 14, $\mathbf{p}_0^l$ denotes the coordinates of a first vertex (e.g., a left vertex) of a reference frame image, $\mathbf{p}_0^r$ denotes the coordinates of a second vertex (e.g., a right vertex) of the reference frame image, $x_0^l$ denotes an x-coordinate of the first vertex (e.g., the left vertex) according to a world coordinate system, $y_0^l$ denotes a y-coordinate of the first vertex according to the world coordinate system, $x_0^r$ denotes the x-coordinate of the second vertex (e.g. the right vertex) according to the world coordinate system, $y_0^r$ denotes the y-coordinate of the second vertex according to the world coordinate system.

Similar to Equation 7, in Equation 14, as values that follow the world coordinate system, $x_k$ denotes the x-coordinate indicating the position of the vehicle at a kth timepoint, $y_k$ denotes the y-coordinate indicating the position of the vehicle at the kth timepoint, and $\theta_k$ denotes a rotation angle of the vehicle from a reference axis (e.g., an x-axis).

In Equation 14, $\vec{u}_k$ denotes a unit vector having a unit size (e.g., 1) and a direction from the first vertex to the second vertex according to a vehicle coordinate system at the kth timepoint, $\mathbf{p}_k^l$ denotes the coordinates of the first vertex according to the vehicle coordinate system at the kth timepoint, and $\mathbf{p}_k^r$ denotes the coordinates of the second vertex according to the vehicle coordinate system at the kth timepoint. $\hat{x}_k$ denotes a vector from the coordinates of the second vertex according to the vehicle coordinate system at the kth timepoint to coordinates corresponding to the position of the vehicle at the kth timepoint according to the world coordinate system.

For example, referring to FIG. 8, the second geometric relationship information of the edges may be determined based on Equation 15 as shown below.

Equation 15:

$$\mathbf{z}_k^l = \begin{bmatrix} d_k^l \cdot \vec{\boldsymbol{u}}_k \\ -\dfrac{\arctan(\alpha_k^l) + \arctan(\alpha_k^r)}{2} \end{bmatrix}$$

$$d_k^l = \begin{cases} \dfrac{1}{2} \cdot \left( f(\alpha_k^l, \beta_k^l) + f(\alpha_k^r, \beta_k^r) \right) & \text{if } \beta_k^l < 0 \ \& \ \beta_k^r < 0 \\[2mm] \dfrac{1}{2} \cdot \left( f(\alpha_k^l, \beta_k^l) - f(\alpha_k^r, \beta_k^r) \right) & \text{if } \beta_k^l \leq 0 \ \& \ \beta_k^r \geq 0 \\[2mm] -\dfrac{1}{2} \cdot \left( f(\alpha_k^l, \beta_k^l) + f(\alpha_k^r, \beta_k^r) \right) & \text{if } \beta_k^l > 0 \ \& \ \beta_k^r > 0 \end{cases}$$

$$f(\alpha, \beta) = \frac{|\beta|}{\sqrt{\alpha^2 + 1}}$$

In a non-limiting example, in Equation 15, similar to Equation 4, on the vehicle coordinate system at the kth timepoint, $\alpha_k^l$ and $\beta_k^l$ respectively denote the gradient and y-intercept of a straight line corresponding to a first side (e.g., a left edge) of a kth frame image, and $\alpha_k^r$ and $\beta_k^r$ respectively denote the gradient and y-intercept of a straight line corresponding to a second side (e.g., a right edge) of the kth frame image.

In Equation 15, similar to Equation 14, $\vec{\boldsymbol{u}}_k$ denotes a unit vector having a unit size (e.g., 1) and a direction from the first vertex to the second vertex according to the vehicle coordinate system at the kth timepoint.

The electronic device may adjust the positioning information of the vehicle based on a difference between the first geometric relationship information and second geometric relationship information of the edges.

For example, the electronic device may adjust the vehicle's positioning information based on the equation below.

Equation 16:

$$\mathbf{x}_{k+1} = \mathbf{x}_k + K_k \cdot \left( \mathbf{z}_k^l - \hat{\mathbf{z}}_k^l \right)$$

$$H_k = \boldsymbol{H}_k^l = \begin{bmatrix} \left( \dfrac{x_0^l - x_0^r}{|x_0^l - x_0^r|} \right)^2 & \left( \dfrac{x_0^l - x_0^r}{|x_0^l - x_0^r|} \right) \cdot \left( \dfrac{y_0^l - y_0^r}{|y_0^l - y_0^r|} \right) & 0 \\[3mm] \left( \dfrac{x_0^l - x_0^r}{|x_0^l - x_0^r|} \right) \cdot \left( \dfrac{y_0^l - y_0^r}{|y_0^l - y_0^r|} \right) & \left( \dfrac{y_0^l - y_0^r}{|y_0^l - y_0^r|} \right)^2 & 0 \\[3mm] 0 & 0 & -1 \end{bmatrix}$$

FIG. 9 illustrates an example of determining the first geometric relationship information and second geometric relationship information of an object in or around a parking area according to one or more embodiments.

Referring to FIG. 9, in a non-limiting example, the electronic device (e.g., electronic device 1000 of FIG. 10) may detect an object in or around the parking area as landmarks (or candidate landmarks). The electronic device may determine a score of the object. As described above with reference to FIG. 2, the electronic device may detect the score of the object based on an angle of a vehicle to the parking area. The electronic device may determine the first geometric relationship information and second geometric relationship information of the object, based on the score of the object being less than an object threshold score.

The electronic device may determine a distance from the vehicle to the object in first sensing data as the first geometric relationship information. The electronic device may use a value based on a distance from a vertex of the parking area to the vehicle as the distance from the vehicle to the object. For example, as illustrated in FIG. 9, when a length along one axis (e.g., a longitudinal axis) of the parking area is constant, and the object is positioned at one end of the axis of the parking area, the value based on the distance from the vertex of the parking area to the vehicle may be related to the distance from the vehicle to the object.

For example, the electronic device may determine the first geometric relationship information corresponding to the object as shown in Equation 17 below.

Equation 17:

$$\hat{\boldsymbol{z}}_k^s = \left(\hat{\gamma} - \hat{d}_k^s\right) \cdot \vec{\boldsymbol{n}}_k$$

$$\hat{d}_k^s = \begin{bmatrix} x_k - x_0^r \\ y_k - y_0^r \end{bmatrix}^{\mathrm{T}} \cdot \vec{\boldsymbol{n}}_k$$

In a non-limiting example, in Equation 17, $\hat{\boldsymbol{z}}_k^s$ is the first geometric relationship information corresponding to the object, which denotes a vector obtained by projecting a vector from the position of the vehicle to the object in a direction of $\vec{\boldsymbol{n}}_k$. $\vec{\boldsymbol{n}}_k$ denotes a unit vector perpendicular to $\vec{\boldsymbol{u}}_k$.

Similar to Equation 1, in Equation 17, $x_0^r$ denotes an x-coordinate of a second vertex (e.g., a right vertex) according to a world coordinate system, and $y_0^r$ denotes a y-coordinate of the second vertex according to the world coordinate system.

Similar to Equation 7, in the world coordinate system, $x_k$ denotes the x-coordinate indicating the position of the vehicle at a kth timepoint, and $y_k$ denotes the y-coordinate indicating the position of the vehicle at the kth timepoint.

In the world coordinate system, $\begin{bmatrix} x_k - x_0^r \\ y_k - y_0^r \end{bmatrix}$ denotes a vector from the second vertex (e.g., the right vertex) to the position of the vehicle, and $\hat{d}_k^s$ denotes a length obtained by projecting a distance from the second vertex to the position of the vehicle in the direction of $\vec{\boldsymbol{n}}_k$.

In the world coordinate system, $\hat{\gamma}$ is a value set based on an initial parking target point. For example, the value may be obtained by subtracting the radius of the vehicle's wheel (e.g., a rear wheel) from the length along the longitudinal axis of the parking area.

The electronic device may determine the distance from the vehicle to the object in second sensing data as the second geometric relationship information. The electronic device may use a distance distribution to determine the distance from the vehicle to the object based on an image. For example, the electronic device may segment an area corresponding to the object from the image. The electronic device may determine a distance from each pixel included in the area corresponding to the object to the vehicle. The distance from a pixel to the vehicle may be determined as a distance projected in a specific direction (e.g., the direction of a vector $\vec{\boldsymbol{n}}_k$). The electronic device may classify a plurality of pixels according to the distance from the plurality of pixels to the vehicle. For example, the electronic device may determine a histogram for the plurality of pixels according to a distance section from each pixel to the vehicle. The electronic device may determine a threshold frequency based on a maximum value of the histogram and may determine a representative distance of a distance section with a frequency greater than or equal to the threshold frequency as the distance from the object to the vehicle.

For example, the electronic device may determine the second geometric relationship information corresponding to the object based on Equation 18 below.

Equation 18:

$$\boldsymbol{z}_k^s = \left(d_k^s - \gamma\right) \cdot \vec{\boldsymbol{n}}_k$$

$$d_k^s = \min\left\{ d \,\middle|\, H_k(d) > \varepsilon \cdot \max\left(H_k(d)\right) \right\}$$

In a non-limiting example, in Equation 18, $z_k$ is the second geometric relationship information corresponding to the object, which denotes a vector obtained by projecting a vector from the position of the vehicle to the object in a direction of $n_k$. Similar to Equation 17, $\vec{\boldsymbol{n}}_k$ denotes a unit vector perpendicular to $\vec{\boldsymbol{u}}_k$. $\gamma$ is a settable value by using a final parking point and may be set to, for example, a radius of the vehicle's wheel (e.g., a rear wheel).

In Equation 18, $d_k^s$ denotes the distance from the vehicle to the object, $H_k$ denotes the histogram classifying the plurality of pixels included in the area corresponding to the object based on the distance from a pixel to the vehicle, $d$ denotes a representative value of a distance section dividing the distance from the pixel to the vehicle, $H_k(d)$ denotes the frequency of the distance section corresponding to the representative value, and $\varepsilon$ denotes a coefficient set depending on the design.

The electronic device may adjust the positioning information of the vehicle based on a difference between the first geometric relationship information and second geometric relationship information of the object.

For example, the electronic device may adjust the positioning information of the object as shown in Equation 19

below.

Equation 19:

$$\mathbf{x}_{k+1} = \mathbf{x}_k + K_k \cdot (\mathbf{z}_k^s - \hat{\mathbf{z}}_k^s)$$

$$H_k = \boldsymbol{H}_k^s = \begin{bmatrix} -\left(\dfrac{y_0^l - y_0^r}{\left|y_0^l - y_0^r\right|}\right)^2 & \left(\dfrac{x_0^l - x_0^r}{\left|x_0^l - x_0^r\right|}\right) \cdot \left(\dfrac{y_0^l - y_0^r}{\left|y_0^l - y_0^r\right|}\right) \\ \left(\dfrac{x_0^l - x_0^r}{\left|x_0^l - x_0^r\right|}\right) \cdot \left(\dfrac{y_0^l - y_0^r}{\left|y_0^l - y_0^r\right|}\right) & -\left(\dfrac{y_0^l - y_0^r}{\left|y_0^l - y_0^r\right|}\right)^2 \end{bmatrix}$$

In an example, when selecting a plurality of landmarks as reference landmarks, the electronic device may adjust the positioning information based on the plurality of landmarks by repeating the adjustment of the positioning information based on each landmark. For example, when selecting the plurality of landmarks from a $k^{th}$ frame image at the $k^{th}$ timepoint as reference landmarks, the electronic device may repeat the performing of the adjustment based on a difference between the first geometric relationship information and second geometric relationship information corresponding to each landmark on the positioning information at the $k^{th}$ timepoint. When completing the adjustment for the plurality of landmarks, the electronic device may acquire the adjusted positioning information as positioning information at a $k+1^{th}$ timepoint.

FIG. 10 illustrates an example electronic device according to one or more embodiments.

Referring to FIG. 10, in a non-limiting example, an electronic device 1000 may include a sensing data acquirer 1010, a processor 1020, a memory 1030, and a communicator 1040.

The sensing data acquirer 1010 may acquire sensing data. In an example, the sensing data acquirer 1010 may include a sensor (e.g., a vision sensor, or an inertial sensor). The sensing data acquirer 1010 may generate the sensing data based on sensing data collected from the sensor. For example, the sensing data acquirer 1010 may include at least a part of the communicator 1040. The sensing data acquirer 1010 may be implemented as a device separate from the sensor and may receive the sensing data from the sensor or a device including the sensor. For example, the sensing data acquirer 1010 may acquire a frame image based on the vision sensor. For example, the sensing data acquirer 1010 may acquire the variance information of the positioning information of a vehicle based on the inertial sensor.

In an example, the processor 1020 may acquire a frame image at each timepoint through the sensing data acquirer 1010. The processor 1020 may select a reference landmark from the frame image. The processor 1020 may determine (e.g., update) the positioning information of the vehicle by using the geometric relationship information of the reference landmark about the vehicle.

The processor 1020 may acquire first sensing data and second sensing data through the sensing data acquirer 1010. The processor 1020 may determine the positioning information of the vehicle by using the first sensing data. The processor 1020 may determine a score of a landmark in the second sensing data. The processor 1020 may determine the first geometric relationship information of a landmark from the first sensing data and may determine the second geometric relationship information of the landmark from the second sensing data. The processor 1020 may adjust the positioning information by using a difference between the determined first geometric relationship information and second geometric relationship information.

The processor 1020 may further execute programs, and/or may control other operations or functions of the electronic device 1000 and operations of a vehicle, and may include any one or a combination of two or more of, for example, a central processing unit (CPU), a graphic processing unit (GPU), a neural processing unit (NPU) and tensor processing units (TPUs), but is not limited to the above-described examples.

In an example, the memory 1030 may temporarily and/or permanently store at least one of the frame image, the first sensing data, the second sensing data, a candidate landmark, a score of the candidate landmark, a reference landmark (e.g., a first reference landmark or a second reference landmark), an object, the positioning information of the vehicle, or geometric relationship information (e.g., the first geometric relationship information or the second geometric relationship information). The memory 1030 may store instructions to determine (e.g., adjust or update) the positioning information of the vehicle, determine the geometric relationship information, and/or select the reference landmark (e.g., the first reference landmark or the second reference landmark). However, the foregoing examples are just examples, and the information stored in the memory 1030 is not limited thereto.

The memory 1030 may include computer-readable instructions. The processor 1020 may be configured to execute computer-readable instructions, such as those stored in the memory 1030, and through execution of the computer-readable instructions, the processor 1020 is configured to perform one or more, or any combination, of the operations and/or methods described herein. The memory 1030 may be a volatile or nonvolatile memory.

The communicator 1040 may transmit or receive one or more of the frame image, the first sensing data, the second sensing data, the candidate landmark, the score of the candidate landmark, the reference landmark (e.g., the first reference landmark or the second reference landmark), the object, the positioning information of the vehicle, or the geometric relationship information (e.g., the first geometric relationship information or the second geometric relationship information). The communicator 1040 may establish a wired communication channel and/or a wireless communication channel with the external device (e.g., the electronic device and the server) and may establish communication with the external device via a long-range communication network, such as cellular communication, short-range wireless communication, local area network (LAN) communication, Bluetooth™, Wi-Fi direct or infrared data association (IrDA), a legacy cellular network, a fourth generation (4G) and/or 5G network, next-generation communication, the Internet, or a computer network (e.g., LAN or a wide area network (WAN)).

The electronic devices, processors, memories, neural networks, vehicles, electronic device 1000, sensing data acquirer 1010, processor 1020, memory 1030, and communicator 1040 described herein and disclosed herein described with respect to FIGS. 1-10 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-10 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

Further to the above description, the present disclosure may relate to any of the following clauses.

Clause 1. A processor-implemented method, the method comprising: selecting a first reference landmark from among a first plurality of candidate landmarks related to a parking area of a vehicle in a first frame image corresponding to a first timepoint; determining positioning information of the vehicle by using geometric relationship information of the selected first reference landmark with respect to the vehicle; selecting a second reference landmark from among a second plurality of candidate landmarks in a second frame image corresponding to a second timepoint, the second timepoint being temporally subsequent to the first timepoint; and updating the positioning information using the geometric relationship information of the selected second reference landmark with respect to the vehicle.

Clause 2. The method of clause 1, wherein the determining the positioning information of the vehicle comprises determining the parking area of the vehicle, wherein each of the first frame image and the second frame image comprises an area corresponding to a portion of the determined parking area, and wherein the selecting the first reference landmark comprises: detecting the plurality of candidate landmarks based on the determined parking area; and calculating scores of the detected plurality of candidate landmarks.

Clause 3. The method of clause 2, wherein the determining the parking area comprises: determining the parking area from among areas occupiable by the vehicle within a space around the vehicle based on occupancy information of the space around the vehicle and volume information of the vehicle.

Clause 4. The method of clause 2 or 3, wherein the detecting the plurality of candidate landmarks comprises detecting vertices of the parking area as candidate landmarks, and wherein the calculating the scores of the plurality of candidate landmarks comprises calculating scores of the vertices based on a distance difference between a reference distance between reference vertices at a reference timepoint and a distance between first vertices at the first timepoint.

Clause 5. The method of any of the clauses 2-4, wherein the detecting the plurality of candidate landmarks comprises detecting edges of the parking area as candidate landmarks, and wherein the calculating the scores of the plurality of candidate landmarks comprises calculating scores of the edges based on angles of first edges in the first frame image.

Clause 6. The method of any of the clauses 2-5, wherein the detecting the plurality of candidate landmarks comprises detecting an object in or around the parking area as a candidate landmark, and wherein the calculating the scores of the plurality of candidate landmarks comprises calculating a score of the object based on an angle of the vehicle to the parking area in the first frame image.

Clause 7. The method of any of the clauses 2-6, wherein the selecting the first reference landmark comprises selecting first vertices of the parking area in the first frame image as the first reference landmark, and wherein the selecting the second reference landmark comprises selecting second vertices of the parking area in the second frame image and second edges of the parking area in the second frame image as the second reference landmark.

Clause 8. The method of clause 7, wherein the calculating the positioning information of the vehicle further comprises: excluding vertices of the parking area in a third frame image from a third reference landmark, based on acquiring the third frame image corresponding to a third timepoint temporally subsequent to the second timepoint.

Clause 9. The method of any of the clauses 2-8, wherein the selecting the first reference landmark comprises selecting first edges of the parking area in the first frame image as the first reference landmark, and wherein the selecting the second reference landmark comprises selecting second edges of the parking area in the second frame image and an object in or around the parking area in the second frame image as the second reference landmark.

Clause 10. The method of clause 9, wherein the calculating the positioning information of the vehicle further comprises:

excluding third edges of the parking area in a third frame image from a third reference landmark, based on acquiring the third frame image corresponding to a third timepoint temporally subsequent to the second timepoint.

Clause 11. The method of any of the clauses 1-10, wherein the updating the positioning information of the vehicle by using the geometric relationship information of the second reference landmark comprises: updating the positioning information of the vehicle based on a difference between comparison geometric relationship information and the geometric relationship information of the second reference landmark.

Clause 12. The method of clause 11, wherein the updating the positioning information of the vehicle by using the geometric relationship information of the second reference landmark comprises: acquiring the comparison geometric relationship information by transforming the determined positioning information by using inertial data acquired from an inertial sensor.

Clause 13. The method of clause 11 or 12, wherein the updating the positioning information of the vehicle by using the geometric relationship information of the second reference landmark comprises: acquiring the comparison geometric relationship information by using a map indicating positions of the plurality of candidate landmarks.

Clause 14. The method of any of the clauses 1-13, wherein the selecting the second reference landmark comprises determining whether to select a candidate landmark as the second reference landmark, based on a result of comparing a score of each candidate landmark with a threshold score set for the candidate landmark, and wherein the updating the positioning information of the vehicle by using the geometric relationship information of the second reference landmark comprises skipping the updating of the positioning information based on the second frame image responsive to not all of the plurality of candidate landmarks being selected as the second reference landmark.

Clause 15. A processor-implemented method, the method comprising: determining positioning information of a vehicle by using first sensing data acquired from a first sensor; determining first geometric relationship information of a landmark from the first sensing data and second geometric relationship information of the landmark from second sensing data, based on a score of the landmark in the second sensing data acquired from a second sensor; and adjusting the positioning information by using a difference between the determined first geometric relationship information and second geometric relationship information.

Clause 16. The method of clause 15, wherein the first sensor comprises an inertial sensor, wherein the first sensing data comprises variance information of the positioning information of the vehicle, and wherein the determining the positioning information of the vehicle by using the first sensing data comprises transforming the positioning information of the vehicle by using the variance information in response to the first sensing data being acquired to update the position information.

Clause 17. The method of clause 15 or 16, wherein the second sensor comprises a vision sensor, and wherein the determining the first geometric relationship information and the second geometric relationship information comprises: acquiring an image based on the second sensing data; detecting the landmark from the image; calculating a score of the landmark detected from the image; and determining the second geometric relationship information based on the score.

Clause 18. The method of any of the clauses 15-17, wherein the adjusting the positioning information comprises: adjusting the positioning information responsive to the score being less than a threshold score; and skipping the adjusting of the positioning information based on the second geometric relationship information responsive to the score being greater than or equal to the threshold score.

Clause 19. The method of any of the clauses 15-18, wherein the landmark comprises a plurality of candidate landmarks, and wherein the determining the first geometric relationship information and the second geometric relationship information comprises: calculating scores of the plurality of candidate landmarks in the second sensing data; and determining a reference landmark among the plurality of candidate landmarks, based on the scores of the plurality of candidate landmarks, and wherein the adjusting the positioning information comprises adjusting the positioning information based on a difference between first geometric relationship information and second geometric relationship information corresponding to each reference landmark.

Clause 20. The method of any of the clauses 15-19, wherein the determining the positioning information of the vehicle further comprises determining a parking area for the vehicle, and wherein the determining the first geometric relationship information and the second geometric relationship information comprises detecting the landmark based on the determined parking area.

Clause 21. The method of clause 20, wherein the determining the parking area comprises: determining the parking area among areas occupiable by the vehicle of a space based on occupancy information of the space and volume information of the vehicle.

Clause 22. The method of clause 20 or 21, wherein the detecting the landmark comprises detecting vertices of the parking area as the landmark, and wherein the determining the first geometric relationship information and the second geometric relationship information comprises: calculating scores of the vertices based on a distance difference between a distance between the vertices in reference geometric relationship information acquired at a reference timepoint and a distance between the vertices in the second sensing data; determining a position of each vertex in the first sensing data as the first geometric relationship information responsive to the scores of the vertices being less than a vertex threshold score; and determining a position of each vertex in the second sensing data as the second geometric relationship information responsive to the scores of the vertices being less than the vertex threshold score.

Clause 23. The method of any of the clauses 20-22, wherein the detecting the landmark comprises detecting edges of the parking area as the landmark, and wherein the determining the first geometric relationship information and the second geometric relationship information comprises: calculating scores of the edges based on angles of the edges in the second sensing data; determining relative positions of the edges to the vehicle in the first sensing data and the angles of the edges to the vehicle as the first geometric relationship information responsive to the scores of the edges being less than an edge threshold score; and determining relative positions of the edges to the vehicle in the second sensing data and the angles of the edges to the vehicle as the second geometric relationship information responsive to the scores of the edges being less than the edge threshold score.

Clause 24. The method of any of the clauses 20-23, wherein the detecting the landmark comprises detecting an object in or around the parking area as the landmark, and wherein the determining the first geometric relationship information and the second geometric relationship information comprises: calculating a score of the object based on an angle of the vehicle to the parking area in the second sensing data; determining a distance from the vehicle to the object in the first sensing data as the first geometric relationship information responsive to the score of the object being less than an object threshold score; and determining a distance from the vehicle to the object in the second sensing data as the second geometric relationship information responsive to the score of the object being less than the object threshold score.

Clause 25. The method of any of the clauses 15-24, wherein the determining the first geometric relationship information and the second geometric relationship information comprises: acquiring the first geometric relationship information by using a map indicating a position of the landmark.

Clause 26. A non-transitory computer-readable storage medium storing instructions that, when executed by a processor, cause the processor to perform the method of any of the clauses 1-25.

Clause 27. An electronic device, comprising: processors configured to execute instructions; and a memory storing the instructions, wherein execution of the instructions configures the processors to: select a first reference landmark from among a plurality of candidate landmarks related to a parking area of a vehicle in a first frame image corresponding to a first timepoint; determine positioning information of the vehicle by using geometric relationship information of the selected first reference landmark to the vehicle; select a second reference landmark from among a plurality of candidate landmarks in a second frame image corresponding to a second timepoint temporally subsequent to the first timepoint; and update the positioning information of the vehicle by using the geometric relationship information of the selected second reference landmark of the vehicle.

Clause 28. An electronic device, comprising: processors configured to execute instructions; and a memory storing the instructions, wherein execution of the instructions configures the processors to: determine positioning information of a vehicle by using first sensing data acquired from a first sensor; determine first geometric relationship information of a landmark from the first sensing data and second geometric relationship information of the landmark from second sensing data, based on a score of the landmark in the second sensing data acquired from a second sensor; and adjust the positioning information by using a difference between the determined first geometric relationship information and second geometric relationship information.

While this disclosure includes specific examples, it will be apparent after an understanding of the disclosure of this application that various changes in form and details may be made in these examples without departing from the scope of the present disclosure as defined by the appended claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above and all drawing disclosures, the scope of the disclosure is also inclusive of the claims and their equivalents, i.e., all variations within the scope of the appended claims are to be construed as being included in the disclosure.

**Claims**

1. A processor-implemented method, comprising:

   selecting a first reference landmark from among a first plurality of candidate landmarks related to a parking area of a vehicle in a first frame image corresponding to a first timepoint;
   determining positioning information of the vehicle by using geometric relationship information of the selected first reference landmark with respect to the vehicle;
   selecting a second reference landmark from among a second plurality of candidate landmarks in a second frame image corresponding to a second timepoint, the second timepoint being temporally subsequent to the first timepoint; and
updating the positioning information using the geometric relationship information of the selected second reference landmark with respect to the vehicle.

2. The method of claim 1, wherein determining the positioning information of the vehicle comprises determining the parking area of the vehicle,

wherein each of the first frame image and the second frame image comprises an area corresponding to a portion of the determined parking area, and
wherein selecting the first reference landmark comprises:

detecting the plurality of candidate landmarks based on the determined parking area; and
calculating scores of the detected plurality of candidate landmarks,

wherein, preferably, determining the parking area comprises determining the parking area from among areas occupiable by the vehicle within a space around the vehicle based on occupancy information of the space around the vehicle and volume information of the vehicle.

3. The method of claim 2, wherein detecting the plurality of candidate landmarks comprises detecting vertices of the parking area as candidate landmarks, and wherein calculating the scores of the plurality of candidate landmarks comprises calculating scores of the vertices based on a distance difference between a reference distance between reference vertices at a reference timepoint and a distance between first vertices at the first timepoint, and/or

wherein detecting the plurality of candidate landmarks comprises detecting edges of the parking area as candidate landmarks, and wherein calculating the scores of the plurality of candidate landmarks comprises calculating scores of the edges based on angles of first edges in the first frame image, and/or
wherein detecting the plurality of candidate landmarks comprises detecting an object in or around the parking area as a candidate landmark, and wherein calculating the scores of the plurality of candidate landmarks comprises calculating a score of the object based on an angle of the vehicle to the parking area in the first frame image.

4. The method of claim 2 or 3, wherein selecting the first reference landmark comprises selecting first vertices of the parking area in the first frame image as the first reference landmark, and wherein selecting the second reference landmark comprises selecting second vertices of the parking area in the second frame image and second edges of the parking area in the second frame image as the second reference landmark, wherein, preferably, calculating the positioning information of the vehicle further comprises excluding vertices of the parking area in a third frame image from a third reference landmark, based on acquiring the third frame image corresponding to a third timepoint temporally subsequent to the second timepoint, or
wherein selecting the first reference landmark comprises selecting first edges of the parking area in the first frame image as the first reference landmark, and wherein selecting the second reference landmark comprises selecting second edges of the parking area in the second frame image and an object in or around the parking area in the second frame image as the second reference landmark, wherein, preferably, the calculating the positioning information of the vehicle further comprises excluding third edges of the parking area in a third frame image from a third reference landmark, based on acquiring the third frame image corresponding to a third timepoint temporally subsequent to the second timepoint.

5. The method of any of the previous claims, wherein updating the positioning information of the vehicle by using the geometric relationship information of the second reference landmark comprises updating positioning information of the vehicle based on a difference between comparison geometric relationship information and the geometric relationship information of the second reference landmark,
wherein, preferably, updating the positioning information of the vehicle by using the geometric relationship information of the second reference landmark comprises:

acquiring the comparison geometric relationship information by transforming the determined positioning information by using inertial data acquired from an inertial sensor; and/or
acquiring the comparison geometric relationship information by using a map indicating positions of the plurality of candidate landmarks.

**6.** The method of any of the previous claims, wherein selecting the second reference landmark comprises determining whether to select a candidate landmark as the second reference landmark, based on a result of comparing a score of each candidate landmark with a threshold score set for the candidate landmark, and
wherein updating the positioning information of the vehicle by using the geometric relationship information of the second reference landmark comprises skipping the updating of the positioning information based on the second frame image responsive to not all of the plurality of candidate landmarks being selected as the second reference landmark.

**7.** A processor-implemented method, the method comprising:

determining positioning information of a vehicle by using first sensing data acquired from a first sensor;
determining first geometric relationship information of a landmark from the first sensing data, preferably by using a map indicating a position of the landmark, and determining second geometric relationship information of the landmark from second sensing data, based on a score of the landmark in the second sensing data acquired from a second sensor; and
adjusting the positioning information by using a difference between the determined first geometric relationship information and second geometric relationship information.

**8.** The method of claim 7, wherein the first sensor comprises an inertial sensor,

wherein the first sensing data comprises variance information of the positioning information of the vehicle, and
wherein determining the positioning information of the vehicle by using the first sensing data comprises transforming the positioning information of the vehicle by using the variance information in response to the first sensing data being acquired to update the position information.

**9.** The method of claim 7 or 8, wherein the second sensor comprises a vision sensor, and wherein determining the first geometric relationship information and the second geometric relationship information comprises:

acquiring an image based on the second sensing data;
detecting the landmark from the image;
calculating a score of the landmark detected from the image; and
determining the second geometric relationship information based on the score.

**10.** The method of any of the claims 7-9, wherein adjusting the positioning information comprises:

adjusting the positioning information responsive to the score being less than a threshold score; and
skipping the adjusting of the positioning information based on the second geometric relationship information responsive to the score being greater than or equal to the threshold score.

**11.** The method of any of the claims 7-10, wherein the landmark comprises a plurality of candidate landmarks,

wherein determining the first geometric relationship information and the second geometric relationship information comprises:

calculating scores of the plurality of candidate landmarks in the second sensing data; and
determining a reference landmark among the plurality of candidate landmarks, based on the scores of the plurality of candidate landmarks, and

wherein adjusting the positioning information comprises adjusting the positioning information based on a difference between first geometric relationship information and second geometric relationship information corresponding to each reference landmark.

**12.** The method of any of the claims 7-11, wherein determining the positioning information of the vehicle further comprises determining a parking area for the vehicle, and

wherein determining the first geometric relationship information and the second geometric relationship information comprises detecting the landmark based on the determined parking area,
wherein, preferably, determining the parking area comprises determining the parking area among areas occupiable by the vehicle of a space based on occupancy information of the space and volume information of the vehicle.

13. The method of claim 12,

wherein detecting the landmark comprises detecting vertices of the parking area as the landmark, and wherein determining the first geometric relationship information and the second geometric relationship information comprises:

calculating scores of the vertices based on a distance difference between a distance between the vertices in reference geometric relationship information acquired at a reference timepoint and a distance between the vertices in the second sensing data;
determining a position of each vertex in the first sensing data as the first geometric relationship information responsive to the scores of the vertices being less than a vertex threshold score; and
determining a position of each vertex in the second sensing data as the second geometric relationship information responsive to the scores of the vertices being less than the vertex threshold score,
and/or

wherein detecting the landmark comprises detecting edges of the parking area as the landmark, and wherein determining the first geometric relationship information and the second geometric relationship information comprises:

calculating scores of the edges based on angles of the edges in the second sensing data;
determining relative positions of the edges to the vehicle in the first sensing data and the angles of the edges to the vehicle as the first geometric relationship information responsive to the scores of the edges being less than an edge threshold score; and
determining relative positions of the edges to the vehicle in the second sensing data and the angles of the edges to the vehicle as the second geometric relationship information responsive to the scores of the edges being less than the edge threshold score,
and/or

wherein detecting the landmark comprises detecting an object in or around the parking area as the landmark, and wherein determining the first geometric relationship information and the second geometric relationship information comprises:

calculating a score of the object based on an angle of the vehicle to the parking area in the second sensing data;
determining a distance from the vehicle to the object in the first sensing data as the first geometric relationship information responsive to the score of the object being less than an object threshold score; and
determining a distance from the vehicle to the object in the second sensing data as the second geometric relationship information responsive to the score of the object being less than the object threshold score.

14. A non-transitory computer-readable storage medium storing instructions that, when executed by a processor, cause the processor to perform the method according to any of the previous claims.

15. An electronic device, comprising:

one or more processors configured to execute instructions; and
a memory storing the instructions, wherein execution of the instructions configures the one or more processors to perform the method according to any of the claims 1-13.

```
                    ┌──────────────────┐
                    │      Start       │
                    └──────────────────┘
                             │
                             │            ┌─ 110
                             ▼
┌────────────────────────────────────────────────────────────────┐
│   Select first reference landmark from among plurality of         │
│   candidate landmarks related to parking area of vehicle in       │
│   first frame image corresponding to first timepoint              │
└────────────────────────────────────────────────────────────────┘
                             │            ┌─ 120
                             ▼
┌────────────────────────────────────────────────────────────────┐
│   Determine positioning information of vehicle by using           │
│   geometric relationship information of first reference           │
│   landmark to vehicle                                             │
└────────────────────────────────────────────────────────────────┘
                             │            ┌─ 130
                             ▼
┌────────────────────────────────────────────────────────────────┐
│   Select second reference landmark from among plurality of        │
│   candidate landmarks in second frame image corresponding         │
│   to second timepoint temporally subsequent to first timepoint    │
└────────────────────────────────────────────────────────────────┘
                             │            ┌─ 140
                             ▼
┌────────────────────────────────────────────────────────────────┐
│   Update positioning information of vehicle by using geometric     │
│   relationship information of selected second reference           │
│   landmark of vehicle                                             │
└────────────────────────────────────────────────────────────────┘
                             │
                             ▼
                    ┌──────────────────┐
                    │       End        │
                    └──────────────────┘
```

# FIG. 1

**FIG. 2**

FIG. 3

**FIG. 4**

510

500

502

540

520

503

502

500 540

530

503

502

500 540

**FIG. 5**

```
                         ┌──────────────┐
                         │    Start     │
                         └──────┬───────┘
                                │                            ╭─ 610
       ┌────────────────────────▼─────────────────────────────────┐
       │        Determine positioning information of vehicle        │
       │    by using first sensing data acquired from first sensor  │
       └────────────────────────┬─────────────────────────────────┘
                                │                            ╭─ 620
       ┌────────────────────────▼─────────────────────────────────┐
       │ Determine first geometric relationship information of      │
       │ landmark from first sensing data                           │
       │ and second geometric relationship information of landmark  │
       │ from second sensing data,                                  │
       │ based on score of landmark in second sensing data          │
       │ acquired from second sensor                                │
       └────────────────────────┬─────────────────────────────────┘
                                │                            ╭─ 630
       ┌────────────────────────▼─────────────────────────────────┐
       │    Adjust positioning information by using difference      │
       │    between determined                                      │
       │ first geometric relationship information and second        │
       │ geometric relationship information                         │
       └────────────────────────┬─────────────────────────────────┘
                                │
                         ┌──────▼───────┐
                         │     End      │
                         └──────────────┘
```

**FIG. 6**

FIG. 7

**FIG. 8**

**FIG. 9**

Electronic device 1000

Sensing data acquirer
1010

Processor
1020

Memory
1030

Communicator
1040

**FIG. 10**

Europäisches
Patentamt

European
Patent Office

Office européen
des brevets

# EUROPEAN SEARCH REPORT

**Application Number**

EP 24 20 7627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Visual odometry - Wikipedia", , 14 December 2023 (2023-12-14), pages 1-6, XP093246984, Retrieved from the Internet: URL:https://web.archive.org/web/2023121420 4835/https://en.wikipedia.org/wiki/Visual_ odometry * abstract * * page 2, section 'Algorithm' * * page 2, last paragraph * ----- | 1-15 | INV. G06V20/58 G06T7/73 |
| A | Polanczyk Maciej ET AL: "The application of Kalman filter in visual odometry for eliminating direction drift", ICSES 2010 International Conference on Signals and Electronic Circuits, 7 September 2010 (2010-09-07), pages 1-4, XP093246924, Gliwice, Poland Retrieved from the Internet: URL:https://ieeexplore.ieee.org/stamp/stam p.jsp?arnumber=5595235 * the whole document * ----- | 1-15 | |
| A | LIU YONG ET AL: "Stereo Visual-Inertial Odometry With Multiple Kalman Filters Ensemble", IEEE TRANSACTIONS ON INDUSTRIAL ELECTRONICS, IEEE SERVICE CENTER, PISCATAWAY, NJ, USA, vol. 63, no. 10, 1 October 2016 (2016-10-01), pages 6205-6216, XP011622324, ISSN: 0278-0046, DOI: 10.1109/TIE.2016.2573765 [retrieved on 2016-09-09] * the whole document * ----- | 1-15 | TECHNICAL FIELDS SEARCHED (IPC) G06V G06T |

The present search report has been drawn up for all claims

| Place of search | Date of completion of the search | Examiner |
|---|---|---|
| The Hague | 6 February 2025 | Sagrebin-Mitzel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)